# EUROPÄISCHE PATENTSCHRIFT

(11) **EP 1 890 115 B1**
(45) Veröffentlichungstag und Bekanntmachung des Hinweises auf die Patenterteilung: **10.01.2018**
(21) Anmeldenummer: 07013573.6
(22) Anmeldetag: 11.07.2007
(51) Int. Cl.: G01F 1/66

(54) **Ultraschalldurchflussmesser**
Ultrasound flow meter
Débitmètre à ultrasons

(30) Priorität: 17.08.2006 DE 102006038620
(43) Veröffentlichungstag der Anmeldung: 20.02.2008
(73) Patentinhaber: Diehl Metering GmbH, 91522 Ansbach (DE)
(72) Erfinder: Kroemer, Harald, 91522 Ansbach (DE); Öfelein, Wilhelm, 91522 Ansbach (DE); Hauenstein, Günter, 63477 Maintal (DE)
(74) Vertreter: Kummer, Ralf

(56) Entgegenhaltungen:
- EP-A- 0 559 938
- EP-A- 0 708 313
- EP-A- 1 096 236
- EP-A- 1 693 652
- FR-A- 2 568 013
- US-A1- 2006 288 798
- US-B1- 6 508 134

## Beschreibung

Die Erfindung betrifft einen Durchflussmesser für flüssige oder gasförmige Medien.

Für die Ultraschalldurchflussmessung sind Durchflussmesser mit einem von Medium durchströmten Messkanal sowie einem Einlass- und einem Auslasskanal bekannt, wobei mindestens ein Ultraschallwandlerpaar zum Aussenden bzw. Empfangen von Ultraschallsignalen vorgesehen ist. Wie aus DE 100 47 383 C1 hervorgeht, ist zur Leitung eines Ultraschallsignals von einem Ultraschallwandler zum anderen Ultraschallwandler ein Reflektorpaar im Messkanal angeordnet, so dass eine U-förmige Umlenkung der Ultraschallsignale erfolgt. Innerhalb der Messstrecke bzw. im Eingangsbereich können unsymmetrische oder radial gestörte Strömungsprofile auftreten, die zu einer Verfälschung des Messergebnisses führen.

Es ist auch bekannt, den Durchmesser bzw. Querschnitt des Messkanals zumindest bereichsweise zur Strömungsführung des Mediums zu reduzieren, um eine ausreichend große Strömungsgeschwindigkeit im Messbereich zu erhalten, um eventuelle unsymmetrische Strömungsprofile weitgehend zu eliminieren.

Aus EP 1 096 236 A2 ist ein Messrohr eines Ultraschall-Durchflussmessers bekannt, der einen Einlass- und einen Auslasskanal sowie ein Ultraschallwandlerpaar zum Aussenden bzw. Empfangen von Ultraschallsignalen aufweist, wobei zur Leitung eines Ultraschallsignals von einem Ultraschallwandler zum anderen Ultraschallwandler ein Reflektorpaar vorgesehen ist. Über den Ein- und Auslasskanal wird die zu messende Fluidströmung seitlich in das Messrohr ein- bzw. ausgeleitet. Der Ultraschall wird U-förmig von einem Ultraschallwandler über die Reflektoren zum anderen Ultraschallwandler geführt.

Die Ultraschallwandler sind in Kammern angeordnet, die außerhalb der Strömung am jeweils stirnseitigen Ende des Messrohrs liegen. Die beiden Reflektoren sind parabolisch geformt und befinden sich direkt am stirnseitigen Ende des Messrohrs.

Der aus EP 0 559 938 A1 bekannte Durchflussmesser umfasst ein Anschlussgehäuse mit Ein- und Auslass sowie ein in das Anschlussgehäuse eingesetztes Messrohr, welches sich vom Ein- bis zum Auslass erstreckt und im Bereich der Ultraschallwandler in das Messrohr einseitig integrierte Erhebungen für die Positionierung der Reflektoren umfasst, die zu einer Reduzierung des Durchflussquerschnitts in diesem Bereich führen. Der Ultraschall wird zick-zackförmig von den Ultraschallwandlern über die Reflektoren durch den Messkanal geführt. Die Reflektoren weisen eine ebene Oberfläche auf.

Die EP 0 708 313 A2 betrifft ein Ultraschall-Durchflussmessgerät mit einem vom Medium durchströmten Messkanal, einem Ultraschallwandlerpaar zum Aussenden bzw. Empfangen von Ultraschallsignalen, wobei zur Leitung des Ultraschallsignals von einem Ultraschallwandler zum anderen Ultraschallwandler drei Reflektoren vorgesehen sind. Das Ultraschallsignal wird dabei W-förmig von dem einen Ultraschallwandler über die Reflektoren zum anderen Ultraschallwandler geführt. Zwei der Reflektoren sind an einem in den Messkanal hineinragenden Vorsprung angeordnet. Die Reflektoren weisen ebene Oberflächen auf.

Bei dem aus FR 2 568 013 A bekannten Ultraschall-Durchflussmesser wird der Ultraschall U-förmig von einem Wandler über in den Messkanal hineinragende Reflektoren zum anderen Wandler geführt. Die Reflektoren sind an einer einseitig in den Messkanal hineinragenden Stütze angeordnet. Die Reflektoren weisen eine ebene Oberfläche auf.

Aus der US 6,508,134 B1 ist ein Durchflussmesser bekannt, bei dem zur Durchflussmessung ein zwei Ultraschallwandler sowie einen Reflektor umfassender Messeinsatz innerhalb eines Rohres positioniert ist. Zur Positionierung ist ein mit dem Messeinsatz verbundener in einer Anschlussarmatur geführter Stab vorgesehen. Der Ultraschall wird V-förmig von einem Ultraschallwandler über den Reflektor zum anderen Ultraschallwandler geführt. Der Reflektor weist eine ebene Oberfläche auf.

Es ist die Aufgabe der vorliegenden Erfindung, einen gattungsgemäßen Durchflussmesser zur Verfügung zu stellen, der eine Erhöhung der Messgenauigkeit bei vereinfachter Konstruktion gewährleistet.

Diese Aufgabe wird durch die gesamte Lehre des Patentanspruchs 1 gelöst. Vorteilhafte Weiterbildungen der Erfindung ergeben sich aus den Unteransprüchen.

Es ist vorgesehen, dass mindestens ein Reflektor eine konkave Oberfläche aufweist. Das von einem Ultraschallwandler ausgesendete leicht divergierende Schallfeld bzw. die divergierende Schallkeule wird durch die konkave Oberflächengeometrie des Reflektors geformt bzw. fokussiert. Die Schallkeule weitet sich üblicherweise ausgehend vom Ultraschallwandler um ca. 10° bis 15° auf. Vorteilhafterweise kann die Orientierung des Reflektors so ausgerichtet sein, dass eine optimale Fokussierung erfolgt. Insbesondere können alle Reflektoren eine konkave Oberfläche aufweisen und somit die Ultraschallwellen optimal auf den Empfangswandler fokussieren. Durch die Fokussierung der Ultraschallwellen wird das Empfangssignal deutlich größer. Der Einfluss von Rauschen wird geringer, der Signalrauschabstand wird größer. Insgesamt steigt somit die Messgenauigkeit an.

Ferner sind durch die höhere Empfangsspannung reproduzierbarere Messergebnisse erzielbar und/oder preiswertere Ultraschallwandler einsetzbar. Ein weiterer Vorteil der konkaven Oberfläche liegt darin, dass ein optimierter Selbstreinigungseffekt erreicht wird, da die Oberfläche des Reflektors besser umspült wird. Ein weiterer Vorteil ist ein reduzierter parasitärer Schallanteil in Rohrleitungsnetzen, so dass benachbarte Geräte nicht bzw. weniger beeinflusst werden.

Erfindungsgemäß ist der Durchmesser des vom Medium durchströmten Messkanals bereichsweise zur Strömungsführung des Mediums durch einen an der Messkanalinnenwand angeordneten Messkanalring verringert, der gleichzeitig als Halterung oder Fixierung für weitere Funktionsteile dient. Dies hat den Vorteil bzw. die Doppelfunktion, dass der Messkanal einerseits reduziert ist und das Medium entsprechend durch den Messkanal geleitet wird, was wiederum für eine entsprechend hohe Messgenauigkeit sorgt. Andererseits dient der Messkanalring als Halterung oder Fixierung für weitere Funktionsteile, so dass andere Halterungsmittel oder dergleichen entfallen können. Ferner können das Gehäuse des Messkanals und der Messkanalring aus unterschiedlichen Materialien bestehen. Insbesondere kann das Gehäuse selbst aus Messing, Rot- oder beschichtetem Grauguss, Aluminium, Edelstahl oder aus Kunststoff bestehen, während der Messkanalring vorteilhafterweise aus Kunststoff hergestellt ist.

Mit Vorteil kann dabei der Durchmesser des Messkanals im Bereich der Messstrecke, insbesondere zwischen dem zusammengehörigen Reflektorpaar reduziert sein. Mit den beiden Ultraschallwandlern sowie den beiden Reflektoren wird ein Ultraschallpfad nach dem U-Strahl-Prinzip gebildet, d. h. die Messzone für die Strömungsgeschwindigkeit liegt zwischen den beiden Reflektoren. Die Elektronik eines angeschlossenen Rechenwerkes detektiert die unterschiedlichen Laufzeiten der Schallwellen in und gegen die Strömungsrichtung in der Messstrecke nach dem bekannten Laufzeitdifferenzverfahren. Die starke Strömungseinschnürung durch den Messkanalring sorgt für eine ausreichend große Strömungsgeschwindigkeit zwischen den beiden Reflektoren und eliminiert weitgehend unsymmetrische Strömungsprofile im Eingangsbereich des Messgerätes. Ein ausgeprägter Messeffekt wird erhalten und der Einfluss radial gestörter Strömungsprofile minimiert.

Es kann ein Messkanalring vorgesehen sein, der entweder in dem Messkanal integriert ist oder in einfacherweise in den Messkanal eingesetzt werden kann. Der Messkanalring kann so ausgestaltet sein, dass er den Messkanal gleichmäßig um seinen Umfang reduziert und das Medium direkt durch das Zentrum des Messkanals geleitet wird.

Der Messkanalring kann aus mehreren, insbesondere aus zwei Messkanalringteilen bestehen. Derartige Messkanalringteile haben den Vorteil, dass sie gewisse Toleranzen erlauben und in entsprechender Weise an der Messkanalinnenwand anliegen. Zwei Messkanalringteile haben außerdem den Vorteil, dass sie zwischen sich z. B. ein Strömungsblech aufnehmen können, welches für eine weitere Optimierung der Strömung des Mediums sorgt.

Die zwei Messkanalringteile eines Messkanalrings können zweckmäßigerweise identisch sein, so dass für deren Herstellung z. B. nur eine Spritzgussform erforderlich ist. Außerdem wird dadurch die Montage des Messkanalrings wesentlich erleichtert.

Die Messkanalringteile können vorteilhafterweise lösbar verbindbar, z. B. zusammensteckbar oder verschraubbar sein und z. B. mit dem vorgenannten Strömungsleitblech zusammen als eine Einheit in den Messkanal eingeführt werden. Für Reparaturmaßnahmen können die Messkanalringteile auch wieder in einfacher Weise voneinander gelöst werden.

Die Messkanalringteile können aber auch dauerhaft miteinander verbunden, z. B. verklebt sein.

Mit Vorteil kann von dem Messkanalring eine Halteplatte fixiert werden. Bei dieser Halteplatte kann es sich vorteilhafterweise um die oben beschriebene Strömungsleitplatte handeln.

Ferner kann die Halteplatte zur Anordnung des mindestens einen Reflektorpaars vorgesehen sein.

Die Halteplatte nimmt damit zwei Aufgaben wahr, nämlich zum einen die Optimierung des Strömungsprofils, indem Drallanteile in der Strömung, insbesondere im Einlaufbereich des Messkanals, reduziert werden, und zum anderen die Trägerfunktion für das Reflektorpaar.

Zweckmäßigerweise kann sich die Halteplatte in Längsrichtung des Messkanals erstrecken, wobei sie diametral im Messkanal angeordnet ist. Der Messkanalring zusammen mit der Halteplatte sorgt insbesondere bei größeren Durchflussmessern mit Nennweiten von größer als 50 mm für eine Beschleunigung der Strömungsgeschwindigkeit sowie für eine Eliminierung von störenden Strömungsprofilen.

Der Messkanalring kann mit der Halteplatte zu einer Einheit verbunden sein, so dass diese Einheit als Messeinsatz von vorne bzw. von einer Seite in den Messkanal eingeschoben werden kann. Messkanalring und Halteplatte zusammen bilden sozusagen eine Einheit zur Strömungsoptierung.

Ein oben beschriebener Messkanalringteil kann insbesondere stirnseitig mindestens einen Zapfen aufweisen, der in eine korrespondierende Bohrung in der Halteplatte und/oder in dem anderen Messkanalringteil eingreift. Dadurch ist eine stabile, einfach montierbare und wieder lösbare Verbindung geschaffen.

Zwischen Messkanalring und Messkanalinnenwand kann eine Abdichtung vorgesehen sein, welche Toleranzen ausgleicht. Die Abdichtung kann außerdem die gesamte Einheit, also den Messkanalring und die daran angeordnete Halteplatte umschließen, so dass die stabile Einheit zusätzlich gesichert und zur Messkanalinnenwand abgedichtet ist.

Als Abdichtung können mindestens ein, insbesondere zwei um den Messkanalring umlaufende O-Ringe vorgesehen sein. Zwei O-Ringe erhöhen die Abdichtung und optimieren die Zentrierung des gesamten Messeinsatzes im Gehäuse. Der Messkanalring kann umlaufende Nuten aufweisen, in denen die O-Ringe einliegen, damit diese in ihrer Lage stabilisiert sind. Die O-Ringe gleichen außerdem unterschiedliche Temperaturkoeffizienten zwischen Metall- und Kunststoffteilen aus.

Der Messkanalring kann mindestens eine im Wesentlichen in Strömungsrichtung verlaufende Nut oder einen Kanal im Bereich der Ultraschallwandler aufweisen. Diese Nuten erzeugen eine stetige Strömung über die daran angrenzenden Wandleroberflächen, wodurch sich Ablagerungen nahezu ausschließen lassen. Da der Messkanalring auch Stau- und Wirbelzonen in seinem vorder- und rückseitigen Bereich verursacht, die ggf. zu Ablagerungen auf den Wandleroberflächen führen können, sind diese Nuten von wesentlichem Vorteil.

Die Nut oder der Reinigungskanal zur Vermeidung von Verschmutzung bzw. örtlich stabilen Luftblasen kann an der Innenseite des Messkanalrings angeordnet sein, womit die abdichtenden O-Ringe über den gesamten Außenumfang des Messkanalrings angebracht werden können.

Die Nut kann aber auch an der Außenseite des Messkanalrings angeordnet sein, wo sie auch zur Vermeidung von Verschmutzung bzw. örtlich stabilen Luftblasen in der Totzone des Messkanalrings unterhalb der Wandler dient.

Der mindestens eine O-Ring kann bei der zuletzt genannten Ausführungsvariante in Nuten einliegen, die bis vor die gehäuseseitige Reinigungsnut reichen. Die Nuten für die O-Ringe können dabei als Ringnuten ausgebildet sein, in welcher ein einziger O-Ring eingelegt werden kann.

Mit besonderem Vorteil können Messkanalring und Reflektoren bzw. Halteplatte bzw. Reflektorhalter so zueinander angeordnet bzw. ausgestaltet sein, dass die laminare Strömung des Mediums kaum beeinflusst wird. Damit können Abschattungseffekte, also Strömungsinhomogenitäten in der Messzone und eine zu sehr kleinen Durchflüssen hin stark abfallende Geräte-Kennlinie zuverlässig verhindert werden. Durch die vorteilhafte konstruktive Variante kann der Messbereich z. B. zu sehr kleinen Strömungsgeschwindigkeiten hin ausgedehnt werden, oder alternativ, bei identischen messtechnischen Eigenschaften durch Vergrößerung des Messkanalringinnendurchmessers der Druckabfall des Durchflusszählers verringert werden.

Als eine Ausführungsvariante kann z. B. eine axial geneigte Messstrecke vorgesehen sein, wobei der einlaufseitige Reflektor zur in Längsrichtung verlaufenden Achse (Längsachse) des Messkanals geringer geneigt ist als der auslaufseitige Reflektor. Insbesondere kann der einlaufseitige Reflektor in einem Bereich zwischen 35° und 44° zur in Längsrichtung verlaufenden Achse (Längsachse) des Messkanals geneigt sein, wobei der auslaufseitige Reflektor in einem Bereich zwischen 46° und 70° zur Längsachse geneigt ist. Der Messkanalring selbst muss dabei nicht verändert werden. Die Messstrecke verläuft dadurch axial geneigt zur Längsachse des Messkanals. Durch einen auf ca. 40 % zur Achse reduzierten Anstellwinkel des einlaufseitigen Reflektors und ohne eine vorhergehende Auslenkung der Strömung nach oben durch die Reflektorbefestigung folgt die Strömung weitgehend der Rundung über die Reflektorfläche hinweg. Auch der ausgangsseitige Reflektor wird frei umströmt, so dass sich der gewünschte Selbstreinigungseffekt optimal entfalten kann.

Bei einer weiteren Ausführungsvariante kann auch ein nicht-zentrischer Messkanalring vorgesehen sein, dessen offener Innenbereich außerzentrisch im Messkanal positioniert ist. Bei dem nicht-zentrischen Messkanalring weist eine Seite des Messkanalrings eine größere Dicke auf, die zur gegenüberliegenden Seite kontinuierlich abnimmt. Durch eine entsprechende Anordnung der Reflektoren wird auch die laminare Strömung deutlich effektiver in die Ultraschallmessstrecke umgelenkt.

Die Messstrecke verläuft bei der letzten Ausführungsvariante zweckmäßigerweise im Wesentlichen zentrisch im offenen Innenbereich des Messkanalrings.

Die Reflektoren und/oder Reflektorhalter können in einfacher Weise aus der Halteplatte zumindest bereichsweise ausgestanzt und entsprechend gebogen sein. Bei Bedarf können die Reflektoren von der Ebene der Halteplatte oder von der Ebene der Reflektorhalter nur in Richtung Zentrum des offenen Innenbereichs des Messkanalrings geneigt sein, so dass keine vorhergehende Auslenkung der Strömung in eine andere Richtung erfolgt und dadurch gegebenenfalls Strömungsinhomogenitäten entstehen können.

Ferner kann ein asymmetrischer Messkanalring vorgesehen sein, dessen gegenüberliegende Randbereiche (bzw. Anströmbereiche) in ihrer Neigung sich jeweils kontinuierlich zueinander entgegengesetzt ändern. Die Dicke des Messkanalrings bleibt dabei stets gleich. Der Vorteil dieser Ausführungsvariante ist, dass zwei identische Messkanalringteile verwendet werden können.

Bei einer weiteren Ausführungsvariante kann ein schräger Messkanalring vorgesehen sein, dessen Wandstärke sich über die Breite des Messkanalrings kontinuierlich ändert und im Querschnitt des Messkanalrings auf einer Seite zu- und auf der gegenüberliegenden Seite abnimmt. Hierbei kann eine leichte Auslenkung der Halteplatte nach oben im Bereich der Reflektoren vorgesehen sein, um eine effektive Strömungsführung zu bewirken. Auch in diesem Fall können wieder zwei identische Messkanalringhalbschalen eingesetzt werden.

Alternativ zur oben beschriebenen Vorrichtung mit zwei Messkanalringteilen kann der Messkanalring einteilig ausgebildet sein und die Halteplatte zweiteilig. In diesem Fall können die beiden Halteplattenteile seitlich z. B. in eine entsprechende Nut des Messkanalrings eingesteckt werden.

Der Messkanalring kann aus Kunststoff bestehen und damit als Massenprodukt in kostengünstiger Weise im Spritzgießverfahren hergestellt werden.

Vorteilhafterweise kann in dem Messkanal mindestens eine Strömungsleitplatte vorgesehen sein, die als Halteplatte für das Reflektorpaar dient und sich in Längsrichtung des Messkanals erstreckt. Diese Ausführungsvariante ist oben im Zusammenhang mit der Messkanalring bereits beschrieben worden. Die Halteplatte in der Funktion eines Leitbleches minimiert den Einfluss störender Drallkomponenten in der Wasserströmung, wie sie vor allem hinter sogenannten Raumkrümmern massiv auftreten.

Die Länge der Halteplatte entspricht im Wesentlichen der Länge des Messkanals, damit bereits im Einlauf- und Auslaufkanal eine entsprechende Strömungslenkung erzeugt wird.

Die Halteplatte kann zumindest bereichsweise und zumindest an einem Endbereich randseitig in Nuten an der Messkanalinnenwand für einen stabilen Halt, insbesondere bei strömendem Medium, eingreifen. Dazu kann die Halteplatte in ihren stirnseitigen Endbereichen breiter sein, so dass diese Verbreiterung als Plattenhalter dient und in die jeweiligen Nuten in der Gehäuseinnenwand insbesondere im Flanschbereich eingreifen können.

Die Halteplatte kann aber auch mittels insbesondere an ihren Eckbereichen angeordneten Haltemitteln mit der Messkanalinnenwand verbunden sein. Die Halteplatte selbst muss damit in ihren Endbereichen nicht verbreitert ausgeführt sein. Die Haltemittel können außerdem aus einem solchen Material bestehen, dass sie schädliche Schwingungen abdämpfen.

Die Haltemittel können als Haltestifte ausgebildet sein, die längsseitig an dem jeweiligen Randbereich der Halteplatte angeordnet sind. Die Haltestifte können aus Kunststoff bestehen. Sie dienen der Stabilisierung der Halteplatte und vermeiden - wie oben bereits erläutert - schädliche Schwingungen. Außerdem vermeiden sie einen direkten Kontakt zwischen dem Gehäuse (meist aus Messing) und der Halteplatte (z. B. aus Edelstahl) zur Vermeidung von Kontaktkorrosion. Mittels der Haltemittel oder Haltestifte kann der Abstand vom Gehäuse zur Halteplatte zusätzlich auf einige Millimeter vergrößert werden.

Die Halteplatte erstreckt sich zweckmäßigerweise diametral durch den Messkanal, so dass oberhalb und unterhalb der Halteplatte dieselben Strömungsverhältnisse vorliegen. Die Halteplatte kann mit einem im Messkanal angeordneten Messkanalring verbunden sein, so dass sie mit diesem eine Einheit bildet, wie dies oben beschrieben wurde.

Die Halteplatte kann Reflektorhalter für die Reflektoren aufweisen, so dass die Reflektoren in stabiler Weise angeordnet werden können.

Die Reflektorhalter können vorteilhafterweise strömungsoptimiert geformt sein, um einerseits den Druckabfall in diesem Bereich niedrig zu halten und andererseits die Strömung gezielt in die Ultraschallmesszone zu leiten mit dem Nebeneffekt, dass die Selbstreinigung der Reflektoren begünstigt wird.

Zusätzlich können die Oberflächen der Ultraschallwandler und/oder der Reflektoren und/oder der Reflektorenhalter antihaftbeschichtet sein. Derartige Anithaftbeschichtungen zeichnen sich durch eine niedrige Oberflächenenergie aus. Bewährt haben sich sogenannte diamantartige amorphe Kohlenstoffschichten, die durch chemische Gasphasenabscheidung aufgebracht werden und im Unterschied zu dem bekannten SolGel-Verfahren absolut und dauerhaft beständig gegenüber wässrigen Lösungen sind.

Die Reflektorhalter können mit der Halteplatte lösbar verbunden sein, so dass diese im Schadensfall schnell austauschbar sind. Die Reflektorhalter können zweiteilig sein, wobei ein erstes Reflektorhalterteil Zapfen aufweist, die Bohrungen der Halteplatte durchgreifen und in korrespondierenden Bohrungen eines auf der anderen Seite der Halteplatte positionierten zweiten Reflektorhalters eingreifen. Vor Zusammenfügen der beiden Reflektorhalterteile wird der Reflektor stirnseitig auf einem Reflektorhalterteil eingelegt und durch Zusammenfügen der beiden Teile darin gesichert. Die Reflektorhalter können an ihren stirnseitigen, aneinander zugewandten Flächen abgeschrägt sein, so dass die Reflektoren entsprechend schräg einliegen, damit die gewünschte U-StrahlFührung ermöglicht wird.

Die Reflektoren können jeweils in einer Aufnahme des Reflektorhalters angeordnet sein. Die Tiefe der Aufnahme kann vorteilhafterweise der Dicke der Reflektoren entsprechen, so dass die Stirnseite der Reflektorhalter und die Oberfläche der Reflektoren bündig abschließt und eine Wirbelzone verhindert wird.

Zusätzlich oder alternativ dazu können die Reflektoren abdeckt sein, indem sie z. B. von einem Wandbereich des Reflektorhalters überdeckt sind. Durch die Verwendung eines geeigneten Materials, insbesondere eines Kunststoffmaterials, für die Abdeckung bzw. den Wandbereich des Reflektorhalters bzw. den gesamten Reflektorhalter, dessen schallrelevante Kenndaten (Impedanz) sich höchstens gering von denen des Wassers unterscheiden (z. B. PEEK, PES, PVDF, EPDM, Viton, jeweils ohne oder einem sehr geringen Glasfaseranteil), werden die Reflexionseigenschaften im Vergleich zum offenen Reflektor nicht negativ beeinflusst. Die Positionierung der Reflektoren ist in diesem Fall einfach durchzuführen, da diese nur in entsprechende Vertiefungen der Reflektorhalter eingelegt werden müssen. Eine zusätzliche Befestigung der Reflektoren ist nicht erforderlich.

In einer alternativen Ausführungvariante können die Reflektoren und/oder die Reflektorhalter Bestandteile der Halteplatte sein, wobei sie z. B. aus der Halteplatte zumindest bereichsweise ausgestanzt und hochgebogen sind. Diese Variante ist äußerst einfach und besonders kostengünstig. Reflektorhalter sind eigentlich nicht mehr notwendig, da die ausgestanzten Bereiche der Halteplatte selbst als Reflektoren dienen.

Die Reflektoren können oval geformt und um 45 ° verdreht sein, damit sie den Ultraschall in Form des U-Strahl-Prinzips von Ultraschallwandler zu Ultraschallwandler weiterleiten können. Die Reflektorhalter oder Reflektoren können über Stege mit der Halteplatte verbunden sein, welche so stabil sind, dass sie die Reflektoren in der gebogenen Position dauerhaft halten.

In einer weiteren Ausführungsvariante können mindestens zwei Messstrecken mit jeweils mindestens einem Reflektorpaar und jeweils einem Ultraschallwandler vorgesehen. Damit kann in verschiedenen Bereichen des Messkanals gemessen werden, wodurch eine höhere Messgenauigkeit erreicht wird. Bei sehr großen Nennweiten z. B. über 50 mm des Messkanals ist die Integration von mehreren Messstrecken von Vorteil, um eine hohe Messgenauigkeit zu erreichen. Insbesondere bei Nennweiten größer als 100 mm wird damit eine besonders gute, weitgehend von Strömungsprofil unabhängige Messgenauigkeit erzielt. Vorteilhafterweise können die Kontakte der Wandlerpaare alle gemeinsam parallel (ohne zusätzliche elektronische Beschaltung) am Rechenwerk angeschlossen werden. Statt der sonst üblichen mathematischen Mittelwertbildung durch die Rechenwerksoftware wird die Tatsache ausgenutzt, dass sich phasenverschobene Druckschwingungen auf der Wandleroberfläche physikalisch addieren. Es erfolgt eine Mittelwertbildung unmittelbar aus der Messung. Die beiden Reflektoren eines Reflektorpaares können eine Messstrecke festlegen, so dass die eigentliche Messung nur zwischen den beiden Reflektoren stattfindet. Die Ultraschallwandler dienen dabei lediglich dem Aussenden bzw. Empfangen von Ultraschallsignalen.

Der Ultraschall wird wie bei den obigen Ausführungsvarianten U-förmig von einem Ultraschallwandler über die Reflektoren zum anderen Ultraschallwandler geführt. Die Reflektoren und damit die Messstrecke lassen sich so optimal im strömenden Medium platzieren.

Die Vorteile der Zwei- oder Mehrkanaltechnik bestehen außerdem darin, dass die physikalische Mittelwertbildung eine weitgehende Eliminierung des sekundärströmungsinduzierten Fehlers, welcher durch temperaturbedingte Konvektionsströmungen auftritt, bewirkt. Sowohl bei sehr kleinen Durchflüssen als auch bei hohen Mediumstemperaturen wird eine gute und reproduzierbare Messgenauigkeit erreicht, die weitgehend unabhängig ist von der Einbaulage des Messgerätes.

Die verschiedenen Messstrecken können zumindest bereichsweise von einer Halteplatte, auf der die Reflektoren angeordnet sind, voneinander getrennt sein. Bei der Halteplatte kann es sich vorteilhafterweise um die bei den anderen Ausführungsformen beschriebene Halteplatte handeln.

Die Halteplatte kann demnach gleichzeitig als Reflektorträger dienen. Dabei kann die Halteplatte mit den Reflektoren bzw. Reflektorhaltern spiegelsymmetrisch ausgebildet sein, so dass auf beiden Seiten der Halteplatte dieselben Bedingungen für die Durchflussmessung vorliegen.

Zweckmäßigerweise kann auf jeder Seite der Halteplatte mindestens ein zusammenwirkendes Reflektorpaar bzw. Reflektorhalterpaar angeordnet sein. Dazu können beispielsweise an der Halteplatte direkt gegenüberliegend zwei Hauptträger positioniert sein, die jeweils vier direkt gegenüberliegende Reflektorhalter tragen. Eine effektive Durchschallung des Messkanals ist damit möglich.

Die Halteplatte kann in einem Bereich zwischen den Reflektoren eines Paares offen sein, so dass die Reflektoren bzw. Reflektorhalter einfach montierbar sind.

In der Mitte des Messkanals kann auch ein Verdrängungskörper angeordnet sein, der wie der an der Messkanalinnenwand angeordnete Messkanalring die Strömung direkt in den Ultraschallmesspfand zwingt. Die Strömung innerhalb der Ultraschallmessstrecken lässt sich so gezielt homogenisieren, wodurch Messgenauigkeit und Strömungsinvarianz positiv beeinflusst werden können.

Mit Vorteil kann auch bei der Ausführungsvariante mit mehreren Messstrecken der oben beschriebene Messkanalring vorgesehen sein, der zu der oben bereits geschilderten Strömungsoptimierung führt.

Die Rückseite des jeweils konkaven Reflektors kann entweder plan ausgebildet sein oder wie auch die Vorderseite gewölbt bzw. entsprechend konvex ausgebildet sein. Die Reflektoren mit ebener Rückseite lassen sich z. B. als Metallpulverspritzgussteil herstellen. Dabei können in zweckmäßiger Weise Nuten zur Halterung des Reflektors am Reflektorhalter bereits mit eingeformt werden.

Reflektoren mit einer gewölbten Rückseite dagegen haben den fertigungstechnischen Vorteil, dass sie als Stanzteile hergestellt werden können.

Die Reflektoren können entweder durch Verrasten oder Verkleben an einem Reflektorhalter oder dergleichen befestigt werden.

Vorteilhafterweise kann der mindestens eine Reflektor eine sphärisch-konkave Oberfläche, eine zylindrisch-konkave Oberfläche oder eine parabolische Oberfläche aufweisen. Es ist auch möglich, dass die konkave Oberfläche bzw. Oberseite des Reflektors andere Geometrien aufweist. Je nach Einsatzzweck kann die konkrete Ausgestaltung der Oberflächengeometrie variieren.

Der Radius der Oberflächenwölbung des Reflektors und/oder die Größe des konkaven Reflektors können vorteilhafterweise auf das Schallfeld bzw. die Divergenz der Ultraschallkeule abgestimmt sein. Auf diese Weise ist eine ideale Formung bzw. Fokussierung des Ultraschalls möglich. Außerdem ist es zweckmäßig, wenn der Abstand von Ultraschallwandler zu Reflektor in Abstimmung mit der Größe des Reflektors festgelegt wird. Dabei bedingt ein großer Abstand von Ultraschallwandler zu Reflektor eine entsprechend große Reflektorfläche.

Die Erfindung ist anhand von Ausführungsbeispielen in den Zeichnungsfiguren näher erläutert. Diese zeigen:
- Fig. 1: eine perspektivische, geschnittene Darstellung eines erfindungsgemäßen Durchflussmessers mit Messeinsatz umfassend Messkanalring, Halteplatte und Reflektoren;
- Fig. 2 - Fig. 4: perspektivische, zumindest teilweise geschnittene Darstellungen von alternativen Messeinsätzen;
- Fig. 5: Querschnitt eines Messkanalbereichs mit axial geneigter Messstrecke;
- Fig. 6: Querschnitt eines Messkanalbereichs mit einem nicht-zentrischen Messkanalring;
- Fig. 7: Querschnitt eines Messkanalbereichs mit asymmetrischem Messkanalring;
- Fig. 8: perspektivische, zumindest teilweise geschnittene Darstellung eines Messeinsatzes mit asymmetrischem Messkanalring;
- Fig. 9: Querschnitt eines Messkanalbereichs mit schrägem Messkanalring;
- Fig. 10: perspektivische, zumindest teilweise geschnittene Darstellung des Messeinsatzes gemäß Fig. 9;
- Fig. 11: perspektivische, zumindest teilweise geschnittene Darstellung eines Messeinsatzes mit zwei Messstrecken;
- Fig. 12: Querschnittdarstellung eines Messkanals mit zwei Messstrecken;
- Fig. 13: Querschnittdarstellung des Messkanals gemäß Fig. 13 um 90° gedreht;
- Fig. 14 und 15: perspektivische, zumindest teilweise geschnittene Darstellungen von Messeinsätzen mit vier Messstrecken;
- Fig. 16: Prinzipschaubild zur physikalischen Addition;
- Fig. 17: Messkurven von zwei Messkanälen und deren Addition;
- Fig. 18: perspektivische, zumindest teilweise geschnittene Darstellung eines Messeinsatzes mit konkaven Reflektoren sowie
- Fig. 19: perspektivische, zumindest teilweise geschnittene Darstellung eines Messeinsatzes mit konkaven Reflektoren.

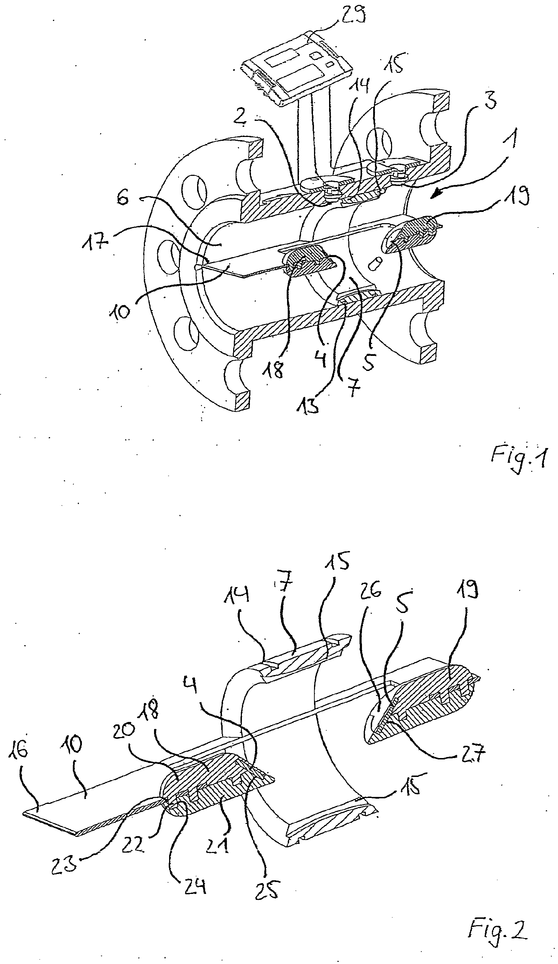

Figur 1 zeigt einen Durchflussmesser für flüssige oder gasförmige Medien mit einem vom Medium durchströmten Messkanal 1, einem Einlass- sowie einem Auslasskanal und einen Ultraschallwandlerpaar 2, 3 zum Aussenden bzw. Empfangen von Ultraschallsignalen, wobei zur Leitung eines Ultraschallsignals von einem Ultraschallwandler 2 zum anderen Ultraschallwandler 3 ein Reflektorpaar 4, 5 im Messkanal 1 vorgesehen ist. Der Durchmesser des Messkanals 1 ist bereichsweise, nämlich im Bereich der Messstrecke, die durch die beiden Reflektoren 4, 5 festgelegt wird, zur Strömungsführung des Mediums reduziert. Der Messkanalring 7 wird durch einen an der Messkanalinnenwand 6 angeordneten Messkanaleinsatz gebildet, der gleichzeitig als Halterung oder Fixierung für weitere Funktionsteile dient.

Die Reflektoren als solche in den Figuren 1 bis 17 sind nicht vom Gegenstand der Erfindung umfasst.

Der Messkanalring 7 sorgt für eine Einpressung der einströmenden Flüssigkeit und damit für eine Beschleunigung der Strömung zwischen den beiden Reflektoren 4, 5, wo die Messzone für die Strömungsgeschwindigkeitsmessung liegt. Damit werden auch weitgehend unsymmetrische Strömungsprofile eliminiert, so dass eine genauere Messung durchführbar ist. Indem der Messkanaleinsatz gleichzeitig als Halterung oder Fixierung für weitere Funktionsteile dient, können Produktionskosten reduziert werden.

Wie insbesondere aus den Zeichnungsfiguren 3, 4, 8, 10, 11, 14 und 15 hervorgeht, besteht der Messkanalring 7 aus zwei Messkanalringteilen 8, 9, welche zwischen sich eine Halteplatte 10 einschließen. Der Messkanalring 7 zusammen mit der Halteplatte 10 bildet einen Messeinsatz, der als eine Einheit von vorne in den Messkanal 1 einschiebbar ist.

Die Messkanalringteile 8, 9 sind identisch ausgebildet, was sowohl für deren Herstellung als auch die Montage vorteilhaft ist.

Die Messkanalringteile 8, 9 sind zusammensteckbar und auf diese Weise einfach montierbar und zu Reparaturmaßnahmen demontierbar.

Die im Messkanal 1 angeordnete Halteplatte 10 dient u. a. als Halter für das Reflektorpaar 4, 5. Die Halteplatte 10 ist also gleichzeitig Träger der Messkanalringteile 8, 9 sowie der Reflektoren 4, 5.

Die Halteplatte 10 erstreckt sich in Längsrichtung des Messkanals 1 und stellt damit gleichzeitig mit ihrer Fläche ein Strömungsleitblech dar.

Ein Messkanalringteil 8 weist stirnseitig jeweils einen Zapfen 11 auf, der in eine korrespondierende Bohrung 12 in der Halteplatte 10 sowie in dem anderen Messkanalringteil 9 eingreift. Damit ist eine stabile Einheit hergestellt.

Ferner ist zwischen dem Messkanalring 7 und der Messkanalinnenwand 6 eine Abdichtung in Form von zwei umlaufenden O-Ringen 13 vorgesehen. Neben der Abdichtfunktion zentrieren die O-Ringe 13 den gesamten Messeinsatz im Gehäuse und gleichen unterschiedliche Temperaturkoeffizienten zwischen Metallgehäuse und Messkanalring 7 aus Kunststoff aus.

Der Messkanalring 7 weist umlaufende Nuten 14 auf, in denen die O-Ringe 13 sicher einliegen.

Zum Schutz der Ultraschallwandler 2, 3 vor Ablagerungen in den Stau- und Wirbelzonen weist der Messkanalring 7 eine in Strömungsrichtung verlaufende Nut 15 auf, die eine stetige Strömung über die Wandleroberflächen erzeugt.

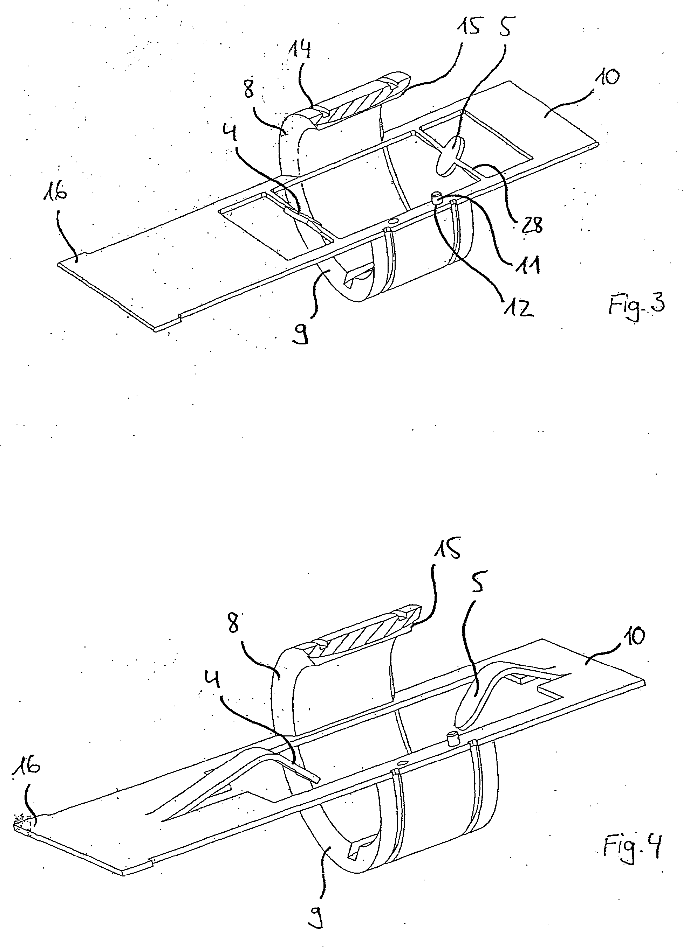

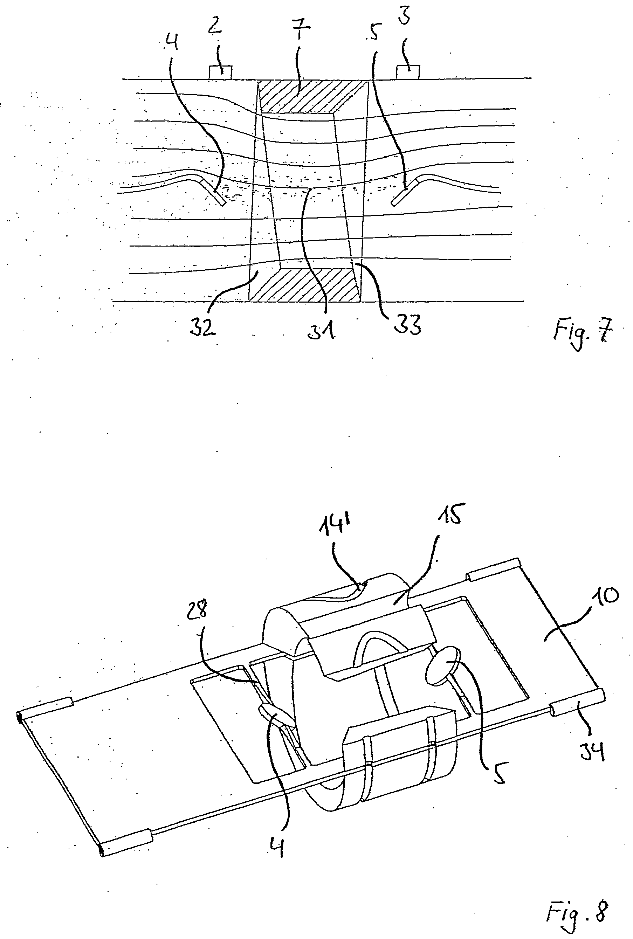

Bei den Ausführungsformen gemäß der Figuren 3, 4 und 11 ist die Nut 15 an der Messkanalinnenwand 6 angeordnet. Die Nut 15 kann aber auch an der Außenseite des Messkanalrings angeordnet sein, wie dies in Figur 8 dargestellt ist. Dort schützt die Nut 15 auch vor Verschmutzung bzw. örtlich stabilen Luftblasen in der Totzone des Messkanalrings unterhalb der Ultraschallwandler 2, 3. Der in dieser Ausführungsform angeordnete O-Ring 13 liegt in Nuten 14 ein, die bis vor die Nut 15 reichen. Die Nuten 14 ist dabei als Ringnut 14 ausgebildet, welche nur bis vor die Nut 15 von beiden Seiten verläuft.

Bei der in Figur 4 gezeigten Variante ragen die Reflektoren 4, 5 wie lang gestreckte Metallzungen in den Ausschnitt der Halteplatte 10. Durch die exakte Biegung in die dargestellte Form wird sowohl die für das U-Strahl-Prinzip nötige Schallführung als auch die gewünschte, anliegende Strömungsführung über den eingangsseitigen Reflektor erreicht, da speziell im Fall der laminaren Strömung diese an der Blechkuppe nicht abreist und somit die negativen Auswirkungen der Wirbelbildung an dieser Position vermieden werden.

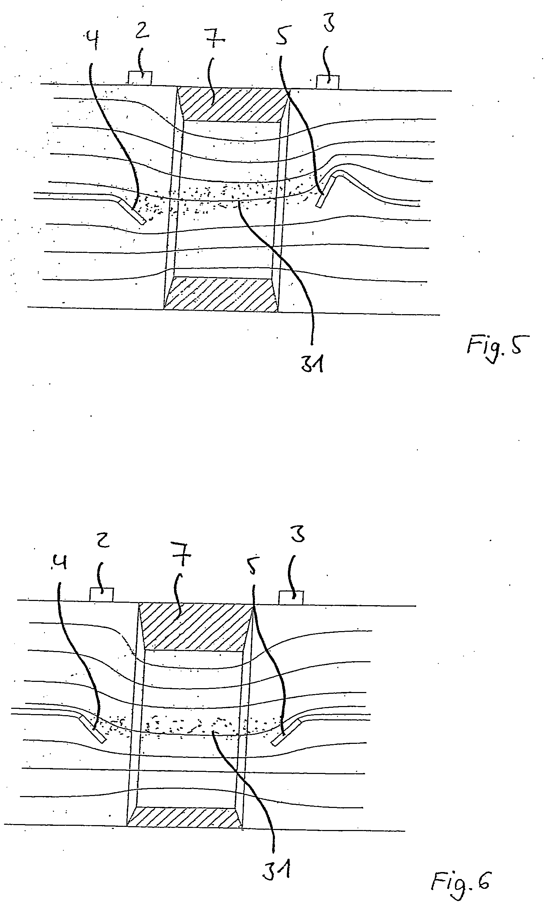

Vor allem in den Figuren 5 bis 10 sind der Messkanalring und die Reflektoren 4, 5 bzw. die Halteplatte 10 so zueinander angeordnet bzw. ausgestaltet, dass die laminare Strömung des Mediums kaum beeinflusst wird.

In Figur 5 ist die Messstrecke 31, die durch einen punktierten Bereich wiedergegeben ist, axial zur Längsachse des Messkanals 1 geneigt. Der einlaufseitige Reflektor 4 ist um ca. 40° zur Längsachse des Messkanals 1 geneigt, wobei der auslaufseitige Reflektor 5 um ca. 65° zur Längsachse geneigt ist. Dadurch folgt die Strömung weitgehend der Rundung über die Reflektorfläche hinweg und eventuelle Strömungsinhomogenitäten werden verhindert. Die dadurch weitgehend bleibende laminare Strömung sorgt außerdem dafür, dass die Reflektoren 4, 5 ständig gereinigt werden.

In Figur 6 ein nicht-zentrischer Messkanalring 7 vorgesehen, dessen offener Innenbereich außerzentrisch im Messkanal 1 positioniert ist. Die Reflektoren 4, 5 bzw. die Bereiche, an denen die Reflektoren 4, 5 angeordnet sind, sind nach unten geneigt, so dass auch hier die laminare Strömung erhalten bleibt. Die Reflektoren 4, 5 sind dabei so angeordnet, dass die Messstrecke 31 im Wesentlichen zentrisch im offenen Innenbereich des Messkanalrings verläuft.

Die Reflektoren 4, 5 und/oder Reflektorhalter 18, 19 können aus der Halteplatte 10 zumindest bereichsweise ausgestanzt und gebogen sein, so dass keine gesonderten Reflektoren oder Reflektorhalter eingesetzt werden müssen.

Die Reflektoren 4, 5 sind von der Ebene der Halteplatte 10 oder von der Ebene der Reflektorhalter 18, 19 nur in Richtung Zentrum des offenen Innenbereichs des Messkanalrings geneigt, so dass Strömungsunregelmäßigkeiten vermieden werden.

In den Figuren 7 und 8 ist ein asymmetrischer Messkanalring 7 vorgesehen, dessen gegenüberliegende Randbereiche 32, 33 (bzw. Anströmbereiche) in ihrer Neigung (und damit auch in ihrer Breite) sich jeweils kontinuierlich zueinander entgegengesetzt verändern. Die Dicke des Messkanalrings 7 bleibt über den gesamten Umfang gleich. Auch diese Anordnung der Reflektoren 4, 5 sowie die spezielle Ausgestaltung des Messkanalrings 7 sorgen für eine weitgehende Beibehaltung der laminaren Strömung. Der Vorteil dieser Ausführungsvariante besteht außerdem darin, dass zwei identische Messkanalringteile 8 verwendet werden können.

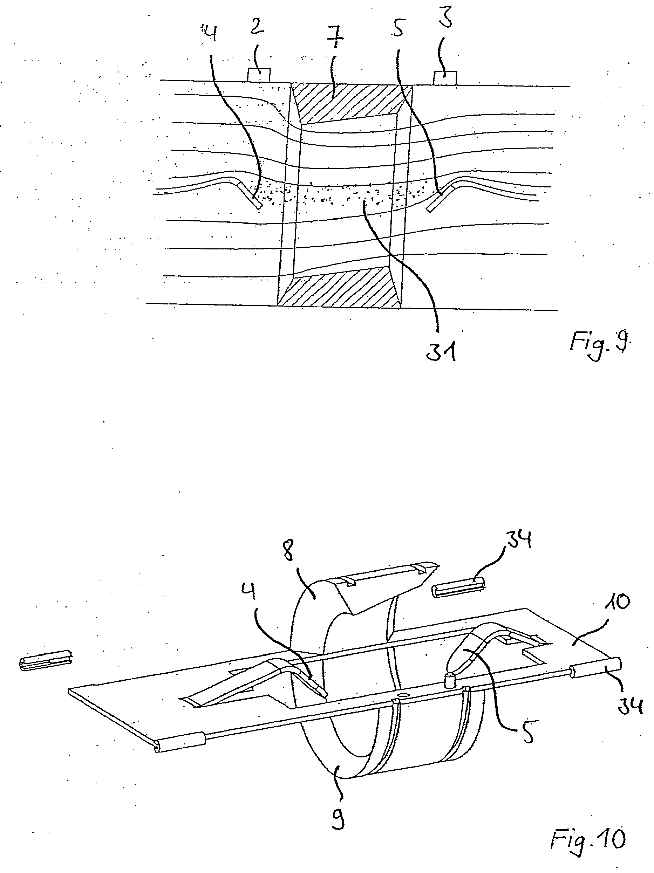

Bei dem Ausführungsbeispiel gemäß der Figuren 9 und 10 ist eine schräger Messkanalring vorgesehen, dessen Wandstärke sich über die Breite des Messkanalrings kontinuierlich ändert, wobei die Wandstärke im Querschnitt des Messkanalrings auf einer Seite zu- und auf der gegenüberliegenden Seite entsprechend abnimmt. Wie auch in Figur 9 zeichnerisch dargestellt ist, wird hier auch die laminare Strömung des Mediums beibehalten.

Es besteht auch die Möglichkeit, dass der Messkanalring 7 einteilig und dabei z. B. die Halteplatte 10 zweiteilig ist, so dass die beiden Teile der Halteplatte 10 an den Messkanalring 7 z. B. eingesteckt werden können. Diese Ausführungsvariante ist jedoch in den Zeichnungsfiguren nicht dargestellt.

Der Messkanalring 7 besteht aus Kunststoff und kann damit in großen Stückzahlen relativ günstig im Spritzgießverfahren hergestellt werden.

Wie oben bereits erwähnt, dient die Halteplatte 10 gleichzeitig als Strömungsleitplatte und als Träger für das Reflektorpaar 4, 5 und erstreckt sich in Längsrichtung des Messkanals 1. Die Halteplatte 10 reduziert insbesondere Drallanteile speziell im Einlaufbereich des Messkanals 1.

Um eine entsprechende Strömungsleitung in gesamten Messkanal 1 zu erzeugen, entspricht die Länge der Halteplatte 10 im Wesentlichen der Länge des Messkanals 1.

Die Halteplatte 10 ist in einem Endbereich verbreitert in Form von Haltebereichen 16 ausgeführt. Die Haltebereiche 16 greifen in Nuten 17 der Messkanalinnenwand 6 ein, womit die Halteplatte 10 in axialer und radialer Richtung zentriert wird.

Die Halteplatte 10 kann aber auch mittels an ihren Eckbereichen angeordneten Haltemitteln, die in den Figuren 8 und 10 als Haltestifte 34 ausgebildet sind, mit der Messkanalinnenwand 6 verbunden sein. Die Haltestifte 34 sind dabei längsseitig an den jeweiligen Randbereich der Halteplatte 10 angeordnet. Die Haltestifte 34 können dabei noch in entsprechenden Nuten 17 an der Messkanalinnenwand 6 einliegen. Die Haltestifte 34 stabilisieren die Halteplatte 10 und vermeiden schädliche Schwingungen der Halteplatte 10. Außerdem verhindern die Haltestifte 34 einen direkten Kontakt des Gehäuses des Messkanals, das meist aus Messing besteht, und der Halteplatte 10, die meist aus Edelstahl besteht, und vermeidet somit eine Kontaktkorrosion.

Die Halteplatte 10 erstreckt sich diametral durch den Messkanal 1, so dass die Strömungsführung über die gesamte Breite des Messkanals 1 herbeigeführt wird und die störenden Strömungsanteile entsprechend verdrängt werden.

Wie oben bereits erwähnt, ist die Halteplatte 10 mit einem im Messkanal 1 angeordneten Messkanalring 7 verbunden und bildet damit einen Messeinsatz zur Strömungsleitung.

Die Halteplatte 10 weist in den Ausführungsvarianten gemäß den Figuren 1, 2 und 5 bis 7 Reflektorhalter 18, 19 für die Reflektoren 4, 5 auf. Die Reflektorhalter 18, 19 haben den Vorteil, dass diese strömungsoptimiert geformt werden können. Dabei sind die Außenflächen der Reflektorhalter 18, 19 entsprechend abgerundet (siehe Figuren 1, 2 und 5 bis 7). Die strömungsoptimierte Form der Reflektorhalter 18, 19 hält einerseits den Druckabfall in diesen Bereichen niedrig und leitet andererseits die Strömung gezielt in die Ultraschallmesszone mit dem Nebeneffekt, dass die Selbstreinigung der Reflektoren 4, 5 begünstigt wird.

Zusätzlich oder alternativ dazu können die Oberflächen der Ultraschallwandler 2, 3 und/oder der Reflektoren 4, 5 und/oder der Reflektorhalter 18, 19 anithaftbeschichtet sein.

Die Reflektorhalter 18, 19 sind mit der Halteplatte 10 lösbar verbindbar, was für Montage- und für Demontagezwecke vorteilhaft ist.

In den Ausführungsvarianten gemäß Figuren 1 und 2 sind die Reflektorhalter 18, 19 jeweils zweiteilig, wobei ein erstes Reflektorhalterteil 20 Zapfen 22 aufweist, die Bohrungen 23 der Halteplatte 10 durchgreifen und in korrespondierende Bohrungen 24 des auf der anderen Seite der Halteplatte 10 positionierten zweiten Reflektorhalterteils 21 eingreifen. Vorher werden die Reflektoren 4, 5 in die entsprechenden Aufnahmen 25, 27 der Reflektorhalter 18, 19 eingelegt und mittels der Verbindung der Reflektorhalterteile 20, 21 darin befestigt.

Bei der Ausführungsvariante gemäß Figur 2 sind die Reflektoren 4, 5 von einem Wandbereich 26 des jeweiligen Reflektorhalters 18 bzw. 19 abgedeckt. Die Reflektorhalter 18, 19 bestehen aus einem geeigneten Kunststoffinaterial, dessen schallrelevante Kenndaten ähnlich denen des Wassers sind, so dass die Reflexionseigenschaften der damit abgedeckten Reflektoren 4, 5 nicht negativ beeinträchtigt werden. Auf diese Weise lässt sich der konstruktive Aufwand stark reduzieren, da die Reflektoren 4, 5 lediglich in die entsprechenden Aufnahmen 27 eingelegt werden müssen, ohne dass es einer zusätzlichen Befestigung bedarf.

Bei den Ausführungsformen der Messeinsätze gemäß den Figuren 3, 4, 8 und 10 sind die Reflektoren 4, 5 Teile der Halteplatte 10 und aus dieser ausgestanzt und nach oben bzw. unten gebogen. Die Reflektoren 4, 5 sind in manchen Fällen über Stege 28 mit der Halteplatte 10 verbunden. Diese Ausführungsvarianten sind besonders preiswert.

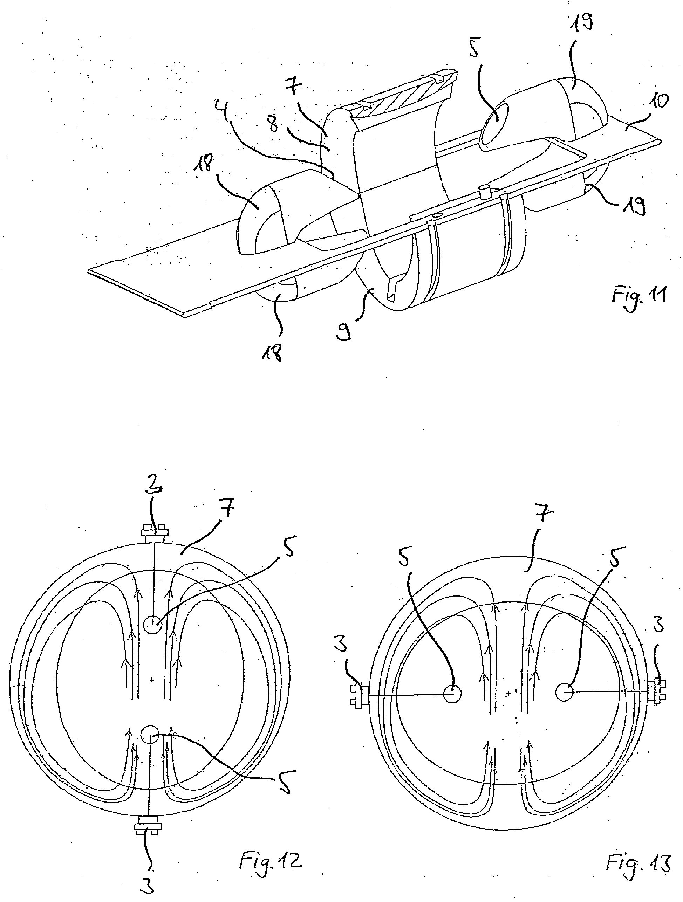

Im Folgenden wird auf die Figuren 11 bis 15 Bezug genommen. Bei den dortigen Messeinsätzen sind mindestens zwei Messstrecken mit jeweils einem Reflektorpaar 4, 5 und jeweils einem Ultraschallwandlerpaar 2 ,3 vorgesehen. Die beiden Reflektoren 4, 5 eines Reflektorpaares legen eine Messstrecke fest. Diese Mehrzahl von Messstrecken ist dann zweckmäßig, wenn der Messkanal 1 eine große Nennweite aufweist (insbesondere größer 100 mm), da bei großen Messkanälen 1 die Strömungsgeschwindigkeit nicht überall gleich ist. Die Kontakte der Ultraschallwandlerpaare werden alle gemeinsam parallel am Rechenwerk 29 angeschlossen, wobei sich phasenverschobene Druckschwingungen auf der Wandleroberfläche physikalisch addieren.

Mit dieser Anordnung wird sozusagen ein großer Wandler in zwei oder mehrere Teile aufgeteilt und die nun getrennte mechanische - und somit auch elektrische Verbindung - wird dadurch kompensiert, dass die geteilten Wandler elektrisch parallel geschalten werden. Für die kontaktierte elektronische Verstärkerschaltung ist es dann völlig unerheblich, ob ein großer Wandler oder zwei mehrere geteilte Wandler angeschlossen werden. Die relevanten elektrischen Kenndaten (Impedanz, ohmscher Widerstand, Kapazität und Induktivität) ändern sich nicht, so lange einige konstruktive Besonderheiten berücksichtigt werden.

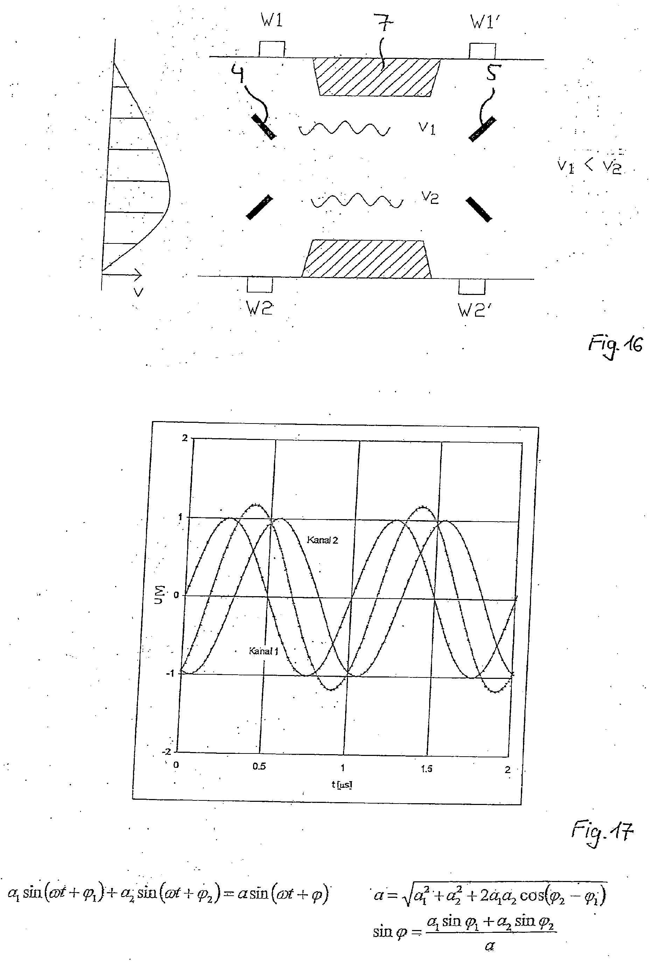

Zur näheren Erläuterung der physikalischen Addition wird auf die Figuren 16 und 17 verwiesen. Die unterschiedlichen Strömungsgeschwindigkeiten v1 und v2 in den Messkanälen 1 erzeugen Laufzeitdifferenzen in den Messstrecken, d. h. die Periode des Messkanals 1 erreicht den Empfängerwandler W1' später als die gleiche des Messkanals 2. Die mechanische Anregung des Ultraschallwandlers ergibt sich aus der Summe dieser beiden Kurven, so dass als elektrisches Wandlersignal die exakte ermittelte Phasenverschiebung der Auswerteelektronik zur Verfügung steht. Unterscheiden sich die beiden Signalamplituden a1 und a2 (siehe Gleichungen zu Figur 17), muss mit einer kleinen Differenz zum exakten Mittelwert gerechnet werden.

Der Ultraschall wird bei jedem einzelnen Messkanal U-förmig von einem Ultraschallwandler 2 über die Reflektoren 4, 5 zum anderen Ultraschallwandler 3 geführt, so dass in jeder Messstrecke dieselben Bedingungen vorliegen.

Weitere Vorteile der Zwei- oder Mehrkanal- bzw. Messstrecken-Technik gehen aus den Figuren 12 und 13 hervor. Durch Abkühlung des Mediums im gehäusenahen Raum entstehen bei großvolumigen Durchflussmessern Konvektionsströmungen. Je größer die Temperaturdifferenz zwischen Medium und der umgebenden Raumluft ist, desto ausgeprägter sind die - auch entlang der Ultraschallmessrichtung - auftretenden Strömungen. Die Strömungen sind in den Figuren 12 und 13 mit Pfeilen gekennzeichnet. Als Folge der gegenläufigen Messrichtung oben bzw. unten im Messkanal 1 bewirkt die physikalische Mittelwertbildung eine weitgehende Eliminierung des sekundärströmungsinduzierten Fehlers, also des Fehlers, der durch die Konvektionsströmung erzeugt wird. Dies gilt sowohl bei der Durchflussmessung unter laminaren Strömungsbedingungen als auch bei Durchfluss Null. Wird der Zwei-Kanal-Durchflussmesser um 90° gedreht in die Rohrleitung geführt (Fig. 13), ist trotz Konvektion nicht mit Fehlmessungen zu rechnen, da Strömungssektor und Ultraschallmessrichtung zueinander senkrecht stehen. Auch bei sehr kleinen Durchflüssen und hohen Mediumstemperaturen wird eine gute und reproduzierbare Messgenauigkeit, weitgehend unabhängig von der Einbaulage des Messgerätes, erreicht.

Der Querschnitt des Messkanals in den Figuren 12 und 13 ist durch den Messkanalring 7 oval, was für die zwei Messstrecken von Vorteil ist.

Auf der Halteplatte 10 können eine Mehrzahl von Reflektoren 4, 5 angeordnet werden. Die Halteplatte 10 kann dabei den oben beschriebenen Halteplatten 10 entsprechen und ebenfalls zur Strömungsführung zusammen mit dem Messkanalring beitragen.

Die Halteplatte 10 ist zusammen mit den Reflektorhaltern 18, 19 spiegelsymmetrisch ausgebildet, so dass im oberen und unteren Bereich des Messkanals 1 dieselben Bedingungen für eine exakte Messung vorliegen. Dabei ist auf jeder Seite der Halteplatte 10 mindestens ein Reflektorhalterpaar 18, 19 angeordnet. Figur 5 zeigt eine Variante eines Messeinsatzes mit zwei parallel angeordneten Ultraschallmesspfaden. Die hier nicht gezeigten, oben und unten angeordneten Wandlerpaare bilden zusammen mit den Reflektoren 4, 5 zwei voneinander völlig unabhängige Ultraschallmessstrecken. Durch die Parallelschaltung der eingangsseitigen Ultraschallwandler 2 bzw. der ausgangsseitigen Ultraschallwandler 3 erreicht man eine physikalische Mittelwertbildung, ohne die Rechenwerksbeschaltung im Vergleich zu den Einkanaltypen abändern zu müssen.

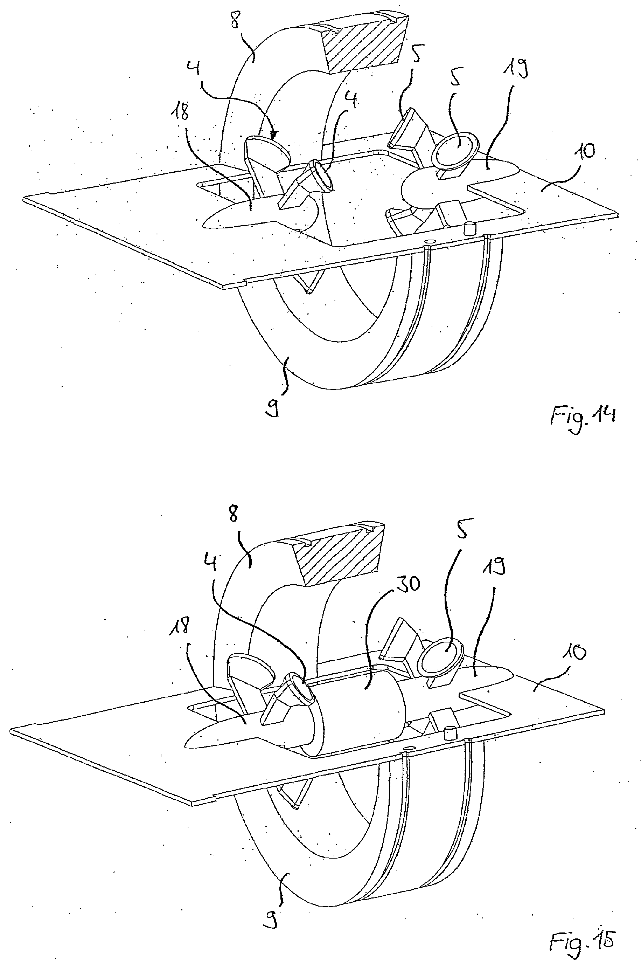

Die in den Figuren 14 und 15 dargestellte Version ist insbesondere für Nennweiten größer 200 mm geeignet. Diese Anordnungen können auch für kleinere Nennweiten genutzt werden, falls eine besonders hohe Messgenauigkeit besonders bei stark asymmetrischen Strömungsprofilen gewünscht wird. Die Varianten zeigen vier Ultraschallmesspfade. Es werden insgesamt acht Ultraschallwandler 2, 3 und acht Reflektoren 4, 5 eingesetzt. Die Geometrie des Messkanalrings ist auch hier kreisförmig, kann aber auch z. B. die Kontur eines vierblättrigen Kleeblattes mit den Ultraschallwandlern 2, 3 in den Blattzentren aufweisen.

Der Unterschied zwischen den Varianten der Figuren 14 und 15 besteht darin, dass die Halteplatte 10 in Figur 14 in einem Bereich zwischen den Reflektoren 4, 5 eines Paares offen ist. In Figur 15 ist in der Mitte des Messkanals 1 ein Verdrängungskörper 30 angeordnet, der für eine konsequentere Stromführung im Rohrzentrum sorgt. Die Strömung innerhalb der Ultraschallmessstrecken lässt sich so gezielt homogenisieren, wodurch Messgenauigkeit und Strömungsinvarianz positiv beeinflusst werden können.

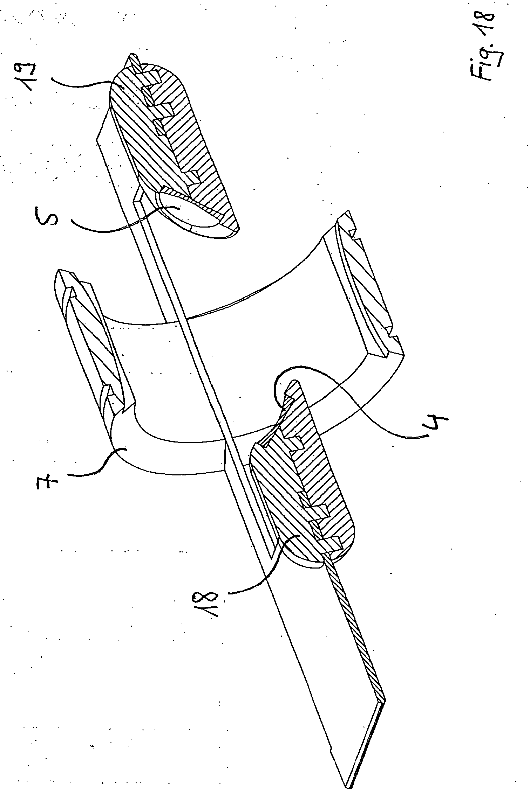

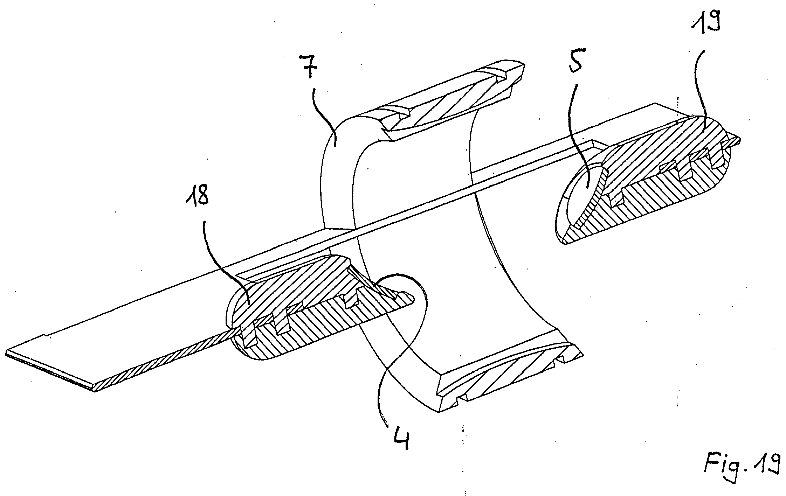

In den Figuren 18 und 19 sind vorteilhafte Ausgestaltungsvarianten der Messeinsätze dargestellt, wobei dort die Reflektoren 4, 5 konkave Oberflächen aufweisen. Die konkaven Oberflächen der Reflektoren 4, 5 sorgen dafür, dass die divergent auseinanderlaufenden Schallwellen des Sendewandlers in der Messstrecke zwischen den beiden Reflektoren 4, 5 parallel ausgerichtet werden und nach der Reflexion am zweiten Reflektor auf die Fläche des Empfangswandlers fokussiert werden, wodurch die Empfangsspannung deutlich größer wird, als wenn ein Teil der Sendeleistung am zweiten Reflektor vorbei im Rohrsystem verschwinden würde. Insgesamt wird die Laufzeitdifferenzmessung einfacher und die Messgenauigkeit steigt. Außerdem wird der parasitäre Schallanteil in Rohrleitungsnetzen verringert, so dass benachbarte Geräte nicht beeinflusst werden. Ein weiterer Vorteil liegt darin, dass die Oberflächen der Reflektoren besser umspült werden, womit ein optimierter Selbstreinigungseffekt erzielt wird.

Bei den in den Figuren 18 und 19 dargestellten Ausführungsvarianten ist die Oberfläche der Reflektoren 4, 5 jeweils sphärisch-konkav ausgebildet. Es sind auch andere konkave Ausgestaltungen möglich, wie z. B. zylindrisch-konkav oder parabolisch. In Figur 18 ist die Rückseite des Reflektors plan ausgebildet, so dass sich der jeweilige Reflektor 4, 5 z. B. als Metallpulverspritzgussteil herstellen lässt, wobei gleichzeitig Ausnehmungen zur Verrastung mit dem jeweiligen Reflektorhalter 18, 19 eingeformt werden können.

In Figur 19 dagegen ist die Rückseite der Reflektoren 4, 5 konvex ausgebildet. Dabei entspricht die Wölbung auf der Rückseite der Wölbung auf der Vorderseite, so dass die Reflektoren 4, 5 in einfacher Weise z. B. durch Stanzen hergestellt werden können.

Die Reflektoren 4, 5 können z. B. durch Verrasten oder Verkleben an dem jeweiligen Reflektorhalter 18, 19 befestigt sein.

Der Radius der Oberflächenwölbung sowie die Größe der konkaven Reflektoren 4, 5 ist auf das Schallfeld bzw. die Divergenz der Ultraschallkeule abgestimmt, so dass eine optimale Fokussierung der Ultraschallwellen erfolgt.

**BEZUGSZEICHENLISTE**

| | |
|---|---|
| 1. Messkanal | 26. Wandbereich |
| 2. Ultraschallwandler | 27. Aufnahme |
| 3. Ultraschallwandler | 28. Steg |
| 4. Reflektor | 29. Rechenwerk |
| 5. Reflektor | 30. Verdrängungskörper |
| 6. Messkanalinnenwand | 31. Messstrecke |
| 7. Messkanalring | 32. Randbereich |
| 8. Messkanalringteil | 33. Randbereich |
| 9. Messkanalringteil | 34. Haltestifte |
| 10. Halteplatte | |
| 11. Zapfen | |
| 12. Bohrung | |
| 13. O-Ring | |
| 14. Nut | |
| 14'. Ringnut | |
| 15. Nut | |
| 16. Haltebereich | |
| 17. Nut | |
| 18. Reflektorhalter | |
| 19. Reflektorhalter | |
| 20. Erstes Reflektorhalterteil | |
| 21. Zweites Reflektorhalterteil | |
| 22. Zapfen | |
| 23. Bohrung | |
| 24. Bohrung | |
| 25. Aufnahme | |

## Patentansprüche

1. Durchflussmesser für flüssige oder gasförmige Medien mit einem vom Medium durchströmten Messkanal (1), mindestens einem Einlass- und mindestens einem Auslasskanal sowie mindestens einem Ultraschallwandlerpaar (2, 3) zum Aussenden bzw. Empfangen von Ultraschallsignalen, wobei zur Leitung eines Ultraschallsignals von einem Ultraschallwandler (2 bzw. 3) zum anderen Ultraschallwandler (3 bzw. 2) mindestens ein Reflektorpaar (4, 5) vorgesehen ist, wobei mindestens ein Reflektor (4, 5) eine konkave Oberfläche aufweist, wobei der Ultraschall U-förmig von einem Ultraschallwandler (2 bzw. 3) über die Reflektoren (4, 5) des Reflektorpaares zum anderen Ultraschallwandler (3 bzw. 2) geführt wird, **dadurch gekennzeichnet, dass**
der Durchmesser des vom Medium durchströmten Messkanals (1) bereichsweise zur Strömungsführung des Mediums durch einen an der Messkanalinnenwand (6) angeordneten Messkanalring verringert ist, der gleichzeitig als Halterung oder Fixierung für weitere Funktionsteile dient.

2. Durchflussmesser nach Anspruch 1,
**dadurch gekennzeichnet, dass**
der Messkanalring aus mehreren, insbesondere aus zwei Messkanalringteilen (8, 9) besteht.

3. Durchflussmesser nach Anspruch 2,
**dadurch gekennzeichnet, dass** die zwei Messkanalringteile (8, 9) des Messkanalrings (7) identisch sind.

4. Durchflussmesser nach einem der Ansprüche 2 oder 3,
**dadurch gekennzeichnet, dass**
die Messkanalringteile (8, 9) lösbar verbindbar, insbesondere zusammensteckbar oder verschraubbar sind.

5. Durchflussmesser nach einem der vorhergehenden Ansprüche,
**dadurch gekennzeichnet, dass**
von dem Messkanalring (7) eine Halteplatte (10) fixiert wird.

6. Durchflussmesser nach Anspruch 5,
**dadurch gekennzeichnet, dass**
die Halteplatte (10) zur Anordnung des mindestens eines Reflektorpaars (4, 5) vorgesehen ist.

7. Durchflussmesser nach einem der vorhergehenden Ansprüche,
**dadurch gekennzeichnet, dass** ein Messkanalringteil (8) insbesondere stirnseitig mindestens einen Zapfen (11) aufweist, der in eine korrespondierende Bohrung (12) in der Halteplatte (10) und/oder in dem anderen Messkanalringteil (9) eingreift.

8. Durchflussmesser nach einem der vorhergehenden Ansprüche,
**dadurch gekennzeichnet, dass**
zwischen Messkanalring (7) und Messkanalinnenwand (6) eine Abdichtung vorgesehen ist.

9. Durchflussmesser nach Anspruch 8,
**dadurch gekennzeichnet, dass**
als Abdichtung mindestens ein, insbesondere zwei um den Messkanalring (7) umlaufende O-Ringe (13) vorgesehen sind.

10. Durchflussmesser nach Anspruch 9,
**dadurch gekennzeichnet, dass**
der Messkanalring (7) umlaufende Nuten (14) aufweist, in denen die O-Ringe (13) einliegen.

11. Durchflussmesser nach einem der vorhergehenden Ansprüche,
**dadurch gekennzeichnet, dass** der Messkanalring (7) mindestens eine im Wesentlichen in Strömungsrichtung verlaufende Nut (15) im Bereich der Ultraschallwandler (2, 3) aufweist.

12. Durchflussmesser nach einem der vorhergehenden Ansprüche,
**dadurch gekennzeichnet, dass**
die Nut (15) an der Außenseite des Messkanalrings (7) angeordnet ist.

13. Durchflussmesser nach Anspruch 12,
**dadurch gekennzeichnet, dass**
der mindestens eine O-Ring (13) in Nuten (14) einliegt, die bis vor die Nut (15) reichen.

14. Durchflussmesser nach einem der Ansprüche 12 oder 13,
**dadurch gekennzeichnet, dass**
die Nuten (14) als Ring-Nuten (14') ausgebildet sind.

15. Durchflussmesser nach einem der vorhergehenden Ansprüche,
**dadurch gekennzeichnet, dass** Messkanalring (7) und Reflektoren (4, 5) bzw. Halteplatte (10) bzw. Reflektorhalter (18, 19) so zueinander angeordnet bzw. ausgestaltet sind, dass die laminare Strömung des Mediums kaum beeinflusst wird.

16. Durchflussmesser nach einem der vorhergehenden Ansprüche,
**dadurch gekennzeichnet, dass**
der einlaufseitige Reflektor (4) zur in Längsrichtung verlaufenden Achse (Längsachse) des Messkanals (1) geringer geneigt ist als der auslaufseitige Reflektor (5).

17. Durchflussmesser nach einem der vorhergehenden Ansprüche,
**dadurch gekennzeichnet, dass**
ein nicht-zentrischer Messkanalring vorgesehen ist, dessen offener Innenbereich außerzentrisch im Messkanal (1) positioniert ist.

18. Durchflussmesser nach Anspruch 17,
**dadurch gekennzeichnet, dass**
die Messstrecke (31) im Wesentlichen zentrisch im offenen Innenbereich des Messkanalrings (7) verläuft.

19. Durchflussmesser nach einem der vorhergehenden Ansprüche,
**dadurch gekennzeichnet, dass**
die Reflektoren (4, 5) und/oder Reflektorhalter (18, 19) aus der Halteplatte (10) zumindest bereichsweise ausgestanzt und gebogen sind.

20. Durchflussmesser nach einem der vorhergehenden Ansprüche,
**dadurch gekennzeichnet, dass**
die Reflektoren (4,5) von der Ebene der Halteplatte (10) oder von der Ebene der Reflektorhalter (18, 19) in Richtung Zentrum des offenen Innenbereichs des Messkanalrings (7) geneigt sind.

21. Durchflussmesser nach einem der vorhergehenden Ansprüche,
**dadurch gekennzeichnet, dass**
ein asymmetrischer Messkanalring (7) vorgesehen ist, dessen gegenüberliegende Randbereiche (32, 33) in ihrer Neigung sich jeweils kontinuierlich zueinander entgegengesetzt verändern.

22. Durchflussmesser nach einem der vorhergehenden Ansprüche,
**dadurch gekennzeichnet, dass**
ein schräger Messkanalring (7) vorgesehen ist, dessen Wandstärke sich über die Breite des Messkanalrings (7) kontinuierlich ändert, wobei im Querschnitt des Messkanalrings (7) die Wandstärke auf einer Seite zu- und auf der gegenüberliegenden Seite abnimmt.

23. Durchflussmesser nach einem der vorhergehenden Ansprüche,
**dadurch gekennzeichnet, dass**
der Messkanalring (7) einteilig ist.

24. Durchflussmesser nach einem der vorhergehenden Ansprüche,
**dadurch gekennzeichnet, dass**
mindestens eine Strömungsleitplatte vorgesehen ist, welche als Halteplatte (10) für das Reflektorpaar (4, 5) dient und sich in Längsrichtung des Messkanals (1) erstreckt.

25. Durchflussmesser nach einem der vorhergehenden Ansprüche,
**dadurch gekennzeichnet, dass**
die Länge der Halteplatte (10) im Wesentlichen der Länge des Messkanals (1) entspricht.

26. Durchflussmesser nach einem der vorhergehenden Ansprüche,
**dadurch gekennzeichnet, dass**
die Halteplatte (10) zumindest bereichsweise randseitig in Nuten (17) der Messkanalinnenwand (6) eingreift.

27. Durchflussmesser nach einem der vorhergehenden Ansprüche,
**dadurch gekennzeichnet, dass**
die Halteplatte (10) mittels insbesondere an ihren Eckbereichen angeordneten Haltemitteln mit der Messkanalinnenwand (6) verbunden ist.

28. Durchflussmesser nach Anspruch 27,
**dadurch gekennzeichnet, dass**
die Haltemittel als Haltestifte (34) ausgebildet sind, die längsseitig an dem jeweiligen Randbereich der Halteplatte (10) angeordnet sind.

29. Durchflussmesser nach einem der vorhergehenden Ansprüche,
**dadurch gekennzeichnet, dass**
sich die Halteplatte (10) diametral durch den Messkanal (1) erstreckt.

30. Durchflussmesser nach einem der vorhergehenden Ansprüche,
**dadurch gekennzeichnet, dass**
die Halteplatte (10) mit dem im Messkanal (1) angeordneten Messkanalring (7) verbunden ist.

31. Durchflussmesser nach einem der vorhergehenden Ansprüche,
**dadurch gekennzeichnet, dass** die Halteplatte (10) Reflektorhalter (18, 19) für die Reflektoren (4, 5) aufweist.

32. Durchflussmesser nach einem der vorhergehenden Ansprüche,
**dadurch gekennzeichnet, dass**
die Reflektorhalter (18, 19) strömungsoptimiert geformt sind.

33. Durchflussmesser nach einem der vorhergehenden Ansprüche,
**dadurch gekennzeichnet, dass**
die Oberflächen der Ultraschallwandler (2, 3) und/oder der Reflektoren (4, 5) und/oder der Reflektorhalter (18, 19) anithaftbeschichtet sind.

34. Durchflussmesser nach einem der vorhergehenden Ansprüche,
**dadurch gekennzeichnet, dass**
die Reflektorhalter (18, 19) mit der Halteplatte (10) lösbar verbindbar sind.

35. Durchflussmesser nach einem der vorhergehenden Ansprüche,
**dadurch gekennzeichnet, dass**
ein Reflektorhalter (18, 19) zweiteilig ist, wobei ein erstes Reflektorhalterteil (20) Zapfen (22) aufweist, die Bohrungen (23) der Halteplatte (10) durchgreifen und in korrespondierende Bohrungen (24) eines auf der anderen Seite positionierten zweiten Reflektorhalterteils (21) eingreifen.

36. Durchflussmesser nach einem der vorhergehenden Ansprüche,
**dadurch gekennzeichnet, dass**
die Reflektoren (4, 5) jeweils in einer Aufnahme (25, 27) des Reflektorhalters (18, 19) angeordnet sind.

37. Durchflussmesser nach einem der vorhergehenden Ansprüche,
**dadurch gekennzeichnet, dass**
die Reflektoren (4, 5) insbesondere von einem Wandbereich (26) abgedeckt sind.

38. Durchflussmesser nach einem der vorhergehenden Ansprüche,
**durch gekennzeichnet, dass**
die Reflektoren (4, 5) oder die Reflektorenhalter (18, 19) Bestandteile der Halteplatte (10) sind.

39. Durchflussmesser nach einem der vorhergehenden Ansprüche,
**dadurch gekennzeichnet, dass** die Reflektoren (4, 5) und/oder Reflektorhalter (18, 19) aus der Halteplatte (10) zumindest bereichsweise ausgestanzt und gebogen sind.

40. Durchflussmesser nach einem der vorhergehenden Ansprüche,
**dadurch gekennzeichnet, dass**
die Reflektorhalter (18, 19) oder Reflektoren (4, 5) über Stege (28) mit der Halteplatte (10) verbunden sind.

41. Durchflussmesser nach einem der vorhergehenden Ansprüche,
**dadurch gekennzeichnet, dass**
mindestens zwei Messstrecken mit jeweils mindestens einem Reflektorpaar (4, 5) und jeweils einem Ultraschallwandlerpaar (2, 3) vorgesehen ist.

42. Durchflussmesser nach einem der vorhergehenden Ansprüche,
**dadurch gekennzeichnet, dass**
die Ultraschallwandlerpaare (2, 3) parallel geschaltet sind.

43. Durchflussmesser nach einem der vorhergehenden Ansprüche,
**dadurch gekennzeichnet, dass**
die Messstrecken zumindest bereichsweise von der Halteplatte (10), auf der die Reflektoren (4, 5) angeordnet sind, voneinander getrennt sind.

44. Durchflussmesser nach einem der vorhergehenden Ansprüche,
**dadurch gekennzeichnet, dass**
die Halteplatte (10) mit den Reflektoren (4, 5) bzw. Reflektorhaltern (18, 19) spiegelsymmetrisch ausgebildet ist.

45. Durchflussmesser nach einem der vorhergehenden Ansprüche,
**dadurch gekennzeichnet, dass**
auf jeder Seite der Halteplatte (10) mindestens ein Reflektorpaar (4, 5) bzw. Reflektorhalterpaar (18, 19) angeordnet ist.

46. Durchflussmesser nach einem der vorhergehenden Ansprüche,
**dadurch gekennzeichnet, dass**
die Halteplatte (10) in einem Bereich zwischen den Reflektoren (4, 5) eines Paares offen ist.

47. Durchflussmesser nach einem der vorhergehenden Ansprüche,
**dadurch gekennzeichnet, dass**
in der Mitte des Messkanals (1) ein Verdrängungskörper (30) angeordnet ist.

48. Durchflussmesser nach einem der vorhergehenden Ansprüche,
**dadurch gekennzeichnet, dass**
der Reflektor (4, 5) eine sphärisch-konkave Oberfläche aufweist.

49. Durchflussmesser nach einem de Ansprüche 1 - 48,
**dadurch gekennzeichnet, dass**
der Reflektor (4, 5) eine zylindrisch-konkave Oberfläche aufweist.

50. Durchflussmesser nach einem der Ansprüche 1 - 48,
**dadurch gekennzeichnet, dass**
der Reflektor (4, 5) eine parabolische Oberfläche aufweist.

51. Durchflussmesser nach einem der vorhergehenden Ansprüche,
**dadurch gekennzeichnet, dass**
der Radius der Oberflächenwölbung und/oder die Größe des Reflektors (4, 5) auf das Schallfeld bzw. die Divergenz der Ultraschallkeule abgestimmt ist.

## Claims

1. Flow meter for liquid or gaseous media, having a measurement channel (1) through which the medium flows, having at least one inlet and at least one outlet duct, and having at least one ultrasound transducer pair (2, 3) for emitting and receiving ultrasound signals, wherein at least one reflector pair (4, 5) is provided for the purposes of directing an ultrasound signal from one ultrasound transducer (2 or 3) to the other ultrasound transducer (3 or 2), wherein at least one reflector (4, 5) has a concave surface, wherein the ultrasound is guided in a U-shaped manner from one ultrasound transducer (2 or 3) via the reflectors (4, 5) of the reflector pair to the other ultrasound transducer (3 or 2), **characterized in that** the diameter of the measurement duct (1) through which the medium flows is reduced in regions, for the flow guidance of the medium, by means of a measurement duct ring which is arranged on the measurement duct inner wall (6) and which simultaneously serves as a holding means or fixing means for further functional parts.

2. Flow meter according to Claim 1, **characterized in that** the measurement duct ring is composed of multiple, in particular of two, measurement duct ring parts (8, 9).

3. Flow meter according to Claim 2, **characterized in that** the two measurement duct ring parts (8, 9) of the measurement duct ring (7) are identical.

4. Flow meter according to either of Claims 2 and 3, **characterized in that** the measurement duct ring parts (8, 9) are detachably connectable, in particular can be plugged together or connected by screw connection.

5. Flow meter according to one of the preceding claims, **characterized in that** a holding plate (10) is fixed by the measurement duct ring (7).

6. Flow meter according to Claim 5, **characterized in that** the holding plate (10) is provided for the arrangement of the at least one reflector pair (4, 5).

7. Flow meter according to one of the preceding claims, **characterized in that** a measurement duct ring part (8) has, in particular on a face side, at least one stud (11) which engages into a corresponding bore (12) in the holding plate (10) and/or in the other measurement duct ring part (9).

8. Flow meter according to one of the preceding claims, **characterized in that** a seal is provided between measurement duct ring (7) and measurement duct inner wall (6).

9. Flow meter according to Claim 8, **characterized in that**, as a seal, at least one, in particular two, O-rings (13) are provided which encircle the measurement duct ring (7).

10. Flow meter according to Claim 9, **characterized in that** the measurement duct ring (7) has encircling grooves (14) in which the O-rings (13) are seated.

11. Flow meter according to one of the preceding claims, **characterized in that** the measurement duct ring (7) has at least one groove (15), which runs substantially in the flow direction, in the region of the ultrasound transducers (2, 3).

12. Flow meter according to one of the preceding claims, **characterized in that** the groove (15) is arranged on the outer side of the measurement duct ring (7).

13. Flow meter according to Claim 12, **characterized in that** the at least one O-ring (13) is seated in grooves (14) which extend as far as in front of the groove (15).

14. Flow meter according to either of Claims 12 and 13, **characterized in that** the grooves (14) are in the form of ring-shaped grooves (14').

15. Flow meter according to one of the preceding claims, **characterized in that** measurement duct ring (7) and reflectors (4, 5) and/or holding plate (10) and/or reflector holders (18, 19) are arranged relative to one another and/or designed such that the laminar flow of the medium is scarcely influenced.

16. Flow meter according to one of the preceding claims, **characterized in that** the inlet-side reflector (4) is inclined relative to the axis running in the longitudinal direction (longitudinal axis) of the measurement duct (1) to a lesser degree than the outlet-side reflector (5).

17. Flow meter according to one of the preceding claims, **characterized in that** a non-central measurement duct ring is provided, the open inner region of which is positioned eccentrically in the measurement duct (1).

18. Flow meter according to Claim 17, **characterized in that** the measurement path (31) runs substantially centrally in the open inner region of the measurement duct ring (7).

19. Flow meter according to one of the preceding claims, **characterized in that** the reflectors (4, 5) and/or reflector holders (18, 19) are at least regionally punched and bent out of the holding plate (10).

20. Flow meter according to one of the preceding claims, **characterized in that** the reflectors (4, 5) are inclined from the plane of the holding plate (10) or from the plane of the reflector holders (18, 19) in the direction of the centre of the open inner region of the measurement duct ring (7).

21. Flow meter according to one of the preceding claims, **characterized in that** an asymmetrical measurement duct ring (7) is provided, the opposite edge regions (32, 33) of which vary in each case oppositely to one another in continuous fashion in terms of their inclination.

22. Flow meter according to one of the preceding claims, **characterized in that** an oblique measurement duct ring (7) is provided, the wall thickness of which changes in continuous fashion over the width of the measurement duct ring (7), wherein, in the cross section of the measurement duct ring (7), the wall thickness increases on one side and decreases on the opposite side.

23. Flow meter according to one of the preceding claims, **characterized in that** the measurement duct ring (7) is formed in one piece.

24. Flow meter according to one of the preceding claims, **characterized in that** at least one flow-guiding plate is provided which serves as a holding plate (10) for the reflector pair (4, 5) and which extends in the longitudinal direction of the measurement duct (1).

25. Flow meter according to one of the preceding claims, **characterized in that** the length of the holding plate (10) substantially corresponds to the length of the measurement duct (1).

26. Flow meter according to one of the preceding claims, **characterized in that** the holding plate (10) engages at least in regions at edge sides into grooves (17) of the measurement duct inner wall (6).

27. Flow meter according to one of the preceding claims, **characterized in that** the holding plate (10) is connected by holding means, arranged in particular at the corner regions thereof, to the measurement duct inner wall (6).

28. Flow meter according to Claim 27, **characterized in that** the holding means are formed as holding pins (34) which are arranged on the longitudinal sides at the respective edge region of the holding plate (10).

29. Flow meter according to one of the preceding claims, **characterized in that** the holding plate (10) extends diametrically through the measurement duct (1).

30. Flow meter according to one of the preceding claims, **characterized in that** the holding plate (10) is connected to the measurement duct ring (7) arranged in the measurement duct (1).

31. Flow meter according to one of the preceding claims, **characterized in that** the holding plate (10) has reflector holders (18, 19) for the reflectors (4, 5).

32. Flow meter according to one of the preceding claims, **characterized in that** the reflector holders (18, 19) are of flow-optimized shape.

33. Flow meter according to one of the preceding claims, **characterized in that** the surfaces of the ultrasound transducers (2, 3) and/or of the reflectors (4, 5) and/or of the reflector holders (18, 19) have an anti-adhesion coating.

34. Flow meter according to one of the preceding claims, **characterized in that** the reflector holders (18, 19) are detachably connectable to the holding plate (10).

35. Flow meter according to one of the preceding claims, **characterized in that** a reflector holder (18, 19) is formed in two parts, wherein a first reflector holder part (20) has studs (22) which engage through the bores (23) of the holding plate (10) and engage into corresponding bores (24) of a second reflector holder part (21) positioned on the other side.

36. Flow meter according to one of the preceding claims, **characterized in that** the reflectors (4, 5) are arranged in each case in a receptacle (25, 27) of the reflector holder (18, 19).

37. Flow meter according to one of the preceding claims, **characterized in that** the reflectors (4, 5) are in particular covered by a wall region (26).

38. Flow meter according to one of the preceding claims, **characterized in that** the reflectors (4, 5) or the reflector holders (18, 19) are constituent parts of the holding plate (10).

39. Flow meter according to one of the preceding claims, **characterized in that** the reflectors (4, 5) and/or reflector holders (18, 19) are at least regionally punched and bent out of the holding plate (10).

40. Flow meter according to one of the preceding claims, **characterized in that** the reflector holders (18, 19) or reflectors (4, 5) are connected to the holding plate (10) by means of webs (28).

41. Flow meter according to one of the preceding claims, **characterized in that** at least two measurement paths with in each case at least one reflector pair (4, 5) and in each case one ultrasound transducer pair (2, 3) are provided.

42. Flow meter according to one of the preceding claims, **characterized in that** the ultrasound transducer pairs (2, 3) are connected in parallel.

43. Flow meter according to one of the preceding claims, **characterized in that** the measurement paths are separated from one another at least regionally by the holding plate (10) on which the reflectors (4, 5) are arranged.

44. Flow meter according to one of the preceding claims, **characterized in that** the holding plate (10) with the reflectors (4, 5) and/or reflector holders (18, 19) is of mirror-symmetrical form.

45. Flow meter according to one of the preceding claims, **characterized in that** at least one reflector pair (4, 5) and/or reflector holder pair (18, 19) is arranged on each side of the holding plate (10).

46. Flow meter according to one of the preceding claims, **characterized in that** the holding plate (10) is open in a region between the reflectors (4, 5) of a pair.

47. Flow meter according to one of the preceding claims, **characterized in that** a displacement body (30) is arranged in the centre of the measurement duct (1).

48. Flow meter according to one of the preceding claims, **characterized in that** the reflector (4, 5) has a spherically concave surface.

49. Flow meter according to one of Claims 1-48, **characterized in that** the reflector (4, 5) has a cylindrically concave surface.

50. Flow meter according to one of Claims 1-48, **characterized in that** the reflector (4, 5) has a parabolic surface.

51. Flow meter according to one of the preceding claims, **characterized in that** the radius of the service curvature and/or the size of the reflector (4, 5) is coordinated with the sound field or the divergence of the ultrasound beam.

## Revendications

1. Débitmètre pour fluides liquides ou gazeux, comprenant un canal de mesure (1) traversé par un fluide, au moins un canal d'entrée et au moins un canal de sortie ainsi qu'au moins une paire de transducteurs d'ultrasons (2, 3) destinés à émettre ou à recevoir des signaux ultrasoniques, au moins une paire de réflecteurs (4, 5) étant présente pour guider un signal ultrasonique d'un transducteur d'ultrasons (2 ou 3) à l'autre transducteur d'ultrasons (3 ou 2), au moins un réflecteur (4, 5) possédant une surface concave, les ultrasons étant acheminés en forme de U d'un transducteur d'ultrasons (2 ou 3) à l'autre transducteur d'ultrasons (3 ou 2) par le biais des réflecteurs (4, 5) de la paire de réflecteurs, **caractérisé en ce que**
le diamètre du canal de mesure (1) traversé par le fluide est réduit dans certaines zones en vue de l'acheminement du fluide à travers un anneau de canal de mesure disposé sur la paroi intérieure de canal de mesure (6), lequel sert en même temps de support ou de fixation pour d'autres pièces fonctionnelles.

2. Débitmètre selon la revendication 1, **caractérisé en ce que** l'anneau de canal de mesure se compose de plusieurs, notamment de deux parties d'anneau de canal de mesure (8, 9).

3. Débitmètre selon la revendication 2, **caractérisé en ce que** les deux parties d'anneau de canal de mesure (8, 9) de l'anneau de canal de mesure (7) sont identiques.

4. Débitmètre selon l'une des revendications 2 ou 3, **caractérisé en ce que** les parties d'anneau de canal de mesure (8, 9) peuvent être reliées de manière amovible, notamment emboîtées l'une dans l'autre ou vissées l'une à l'autre.

5. Débitmètre selon l'une des revendications précédentes, **caractérisé en ce qu'**une plaque de maintien (10) est fixée par l'anneau de canal de mesure (7).

6. Débitmètre selon la revendication 5, **caractérisé en ce que** la plaque de maintien (10) est conçue pour le montage de l'au moins une paire de réflecteurs (4, 5).

7. Débitmètre selon l'une des revendications précédentes, **caractérisé en ce qu'**une partie d'anneau de canal de mesure (8) possède au moins un tenon (11), notamment du côté frontal, qui vient en prise dans un orifice (12) correspondant dans la plaque de maintien (10) et/ou dans l'autre partie d'anneau de canal de mesure (9).

8. Débitmètre selon l'une des revendications précédentes, **caractérisé en ce qu'**une garniture d'étanchéité est présente entre l'anneau de canal de mesure (7) et la paroi intérieure de canal de mesure (6).

9. Débitmètre selon la revendication 8, **caractérisé en ce que** la garniture d'étanchéité présente est un, notamment deux joints toriques (13) périphériques autour de l'anneau de canal de mesure (7).

10. Débitmètre selon la revendication 9, **caractérisé en ce que** l'anneau de canal de mesure (7) possède des rainures (14) périphériques dans lesquelles reposent les joints toriques (13).

11. Débitmètre selon l'une des revendications précédentes, **caractérisé en ce que** l'anneau de canal de mesure (7) possède au moins une rainure (15) qui s'étend sensiblement dans le sens de l'écoulement dans la zone des transducteurs d'ultrasons (2, 3).

12. Débitmètre selon l'une des revendications précédentes, **caractérisé en ce que** la rainure (15) est disposée sur le côté extérieur de l'anneau de canal de mesure (7).

13. Débitmètre selon la revendication 12, **caractérisé en ce que** l'au moins un joint torique (13) repose dans des rainures (14) qui s'étendent jusque devant la rainure (15).

14. Débitmètre selon l'une des revendications 12 ou 13, **caractérisé en ce que** les rainures (14) sont réalisées sous la forme de rainures annulaires (14').

15. Débitmètre selon l'une des revendications précédentes, **caractérisé en ce que** l'anneau de canal de mesure (7) et les réflecteurs (4, 5) ou la plaque de maintien (10) ou des supports de réflecteur (18, 19) sont disposés les uns par rapport aux autres ou configurés de telle sorte que l'écoulement laminaire du fluide est à peine influencé.

16. Débitmètre selon l'une des revendications précédentes, **caractérisé en ce que** le réflecteur (4) du côté de l'entrée est moins incliné que le réflecteur (5) du côté de la sortie par rapport à l'axe (axe longitudinal) du canal de mesure (1) qui s'étend dans le sens longitudinal.

17. Débitmètre selon l'une des revendications précédentes, **caractérisé en ce qu'**il existe un anneau de canal de mesure non centré dont la zone intérieure ouverte est positionnée de manière excentrique dans le canal de mesure (1).

18. Débitmètre selon la revendication 17, **caractérisé en ce que** le segment de mesure (31) s'étend de manière sensiblement centrée dans la zone intérieure ouverte de l'anneau de canal de mesure (7).

19. Débitmètre selon l'une des revendications précédentes, **caractérisé en ce que** les réflecteurs (4, 5) et/ou les supports de réflecteur (18, 19) sont découpés à la matrice au moins dans certaines zones dans la plaque de maintien (10) et pliés.

20. Débitmètre selon l'une des revendications précédentes, **caractérisé en ce que** les réflecteurs (4, 5) sont inclinés en direction du centre de la zone intérieure ouverte de l'anneau de canal de mesure (7) depuis le plan de la plaque de maintien (10) ou depuis le plan des supports de réflecteur (18, 19).

21. Débitmètre selon l'une des revendications précédentes, **caractérisé en ce qu'**il existe un anneau de canal de mesure (7) asymétrique dont les inclinaisons des zones de bordure (32, 33) opposées varient respectivement continuellement l'une par rapport à l'autre.

22. Débitmètre selon l'une des revendications précédentes, **caractérisé en ce qu'**il existe un anneau de canal de mesure (7) biseauté dont l'épaisseur de paroi varie continuellement sur la largeur de l'anneau de canal de mesure (7), l'épaisseur de paroi dans la section transversale de l'anneau de canal de mesure (7) augmentant d'un côté et diminuant de l'autre côté opposé.

23. Débitmètre selon l'une des revendications précédentes, **caractérisé en ce que** l'anneau de canal de mesure (7) est monobloc.

24. Débitmètre selon l'une des revendications précédentes, **caractérisé en ce qu'**il existe au moins une plaque déflectrice qui sert de plaque de maintien (10) pour la paire de réflecteurs (4, 5) et qui s'étend dans la direction longitudinale du canal de mesure (1).

25. Débitmètre selon l'une des revendications précédentes, **caractérisé en ce que** la longueur de la plaque de maintien (10) correspond sensiblement à la longueur du canal de mesure (1).

26. Débitmètre selon l'une des revendications précédentes, **caractérisé en ce que** la plaque de maintien (10) vient au moins dans certaines zones en prise du côté du bord dans les rainures (17) de la paroi intérieure de canal de mesure (6).

27. Débitmètre selon l'une des revendications précédentes, **caractérisé en ce que** la plaque de maintien (10) est reliée à la paroi intérieure de canal de mesure (6) par l'intermédiaire de moyens de maintien qui sont notamment disposés dans ses zones de coin.

28. Débitmètre selon la revendication 27, **caractérisé en ce que** les moyens de maintien sont réalisés sous la forme de broches de maintien (34) qui sont disposées du côté longitudinal sur la zone de bordure respective de la plaque de maintien (10).

29. Débitmètre selon l'une des revendications précédentes, **caractérisé en ce que** la plaque de maintien (10) s'étend diamétralement à travers le canal de mesure (1).

30. Débitmètre selon l'une des revendications précédentes, **caractérisé en ce que** la plaque de maintien (10) est reliée à l'anneau de canal de mesure (7) disposé dans le canal de mesure (1).

31. Débitmètre selon l'une des revendications précédentes, **caractérisé en ce que** la plaque de maintien (10) possède des supports de réflecteur (18, 19) pour les réflecteurs (4, 5).

32. Débitmètre selon l'une des revendications précédentes, **caractérisé en ce que** les supports de réflecteur (18, 19) sont façonnés de manière à optimiser l'écoulement.

33. Débitmètre selon l'une des revendications précédentes, **caractérisé en ce que** les surfaces des transducteurs d'ultrasons (2, 3) et/ou des réflecteurs (4, 5) et/ou des supports de réflecteur (18, 19) sont munies d'un revêtement antiadhésif.

34. Débitmètre selon l'une des revendications précédentes, **caractérisé en ce que** les supports de réflecteur (18, 19) peuvent être reliés de manière amovible à la plaque de maintien (10).

35. Débitmètre selon l'une des revendications précédentes, **caractérisé en ce qu'**un support de réflecteur (18, 19) est en deux parties, une première partie de support de réflecteur (20) possédant des tenons (22) qui traversent des orifices (23) de la plaque de maintien (10) et viennent en prise dans des orifices (24) correspondants d'une deuxième partie de support de réflecteur (21) positionnée de l'autre côté.

36. Débitmètre selon l'une des revendications précédentes, **caractérisé en ce que** les réflecteurs (4, 5) sont respectivement disposés dans un logement (25, 27) du support de réflecteur (18, 19).

37. Débitmètre selon l'une des revendications précédentes, **caractérisé en ce que** les réflecteurs (4, 5) sont notamment recouverts par une zone de paroi (26).

38. Débitmètre selon l'une des revendications précédentes, **caractérisé en ce que** les réflecteurs (4, 5) ou les supports de réflecteur (18, 19) sont des éléments constitutifs de la plaque de maintien (10).

39. Débitmètre selon l'une des revendications précédentes, **caractérisé en ce que** les réflecteurs (4, 5) ou les supports de réflecteur (18, 19) sont découpés à la matrice au moins dans certaines zones dans la plaque de maintien (10) et pliés.

40. Débitmètre selon l'une des revendications précédentes, **caractérisé en ce que** les supports de réflecteur (18, 19) ou les réflecteurs (4, 5) sont reliés à la plaque de maintien (10) par le biais d'éléments jointifs (28).

41. Débitmètre selon l'une des revendications précédentes, **caractérisé en ce qu'**au moins deux segments de mesure comportant respectivement au moins une paire de réflecteurs (4, 5) et respectivement une paire de transducteurs d'ultrasons (2, 3) sont prévus.

42. Débitmètre selon l'une des revendications précédentes, **caractérisé en ce que** les paires de transducteurs d'ultrasons (2, 3) sont branchées en parallèle.

43. Débitmètre selon l'une des revendications précédentes, **caractérisé en ce que** les segments de mesure sont séparés l'un de l'autre au moins dans certaines zones par la plaque de maintien (10) sur laquelle sont disposés les réflecteurs (4, 5).

44. Débitmètre selon l'une des revendications précédentes, **caractérisé en ce que** la plaque de maintien (10) avec les réflecteurs (4, 5) ou les supports de réflecteur (18, 19) est de configuration en symétrie spéculaire.

45. Débitmètre selon l'une des revendications précédentes, **caractérisé en ce qu'**au moins une paire de réflecteurs (4, 5) ou de supports de réflecteur (18, 19) est disposée de chaque côté de la plaque de maintien (10).

46. Débitmètre selon l'une des revendications précédentes, **caractérisé en ce que** la plaque de maintien (10) est ouverte dans une zone entre les réflecteurs (4, 5) d'une paire.

47. Débitmètre selon l'une des revendications précédentes, **caractérisé en ce qu'**un corps de déplacement (30) est disposé au centre du canal de mesure (1).

48. Débitmètre selon l'une des revendications précédentes, **caractérisé en ce que** le réflecteur (4, 5) possède une surface concave sphérique.

49. Débitmètre selon l'une des revendications 1 à 48, **caractérisé en ce que** le réflecteur (4, 5) possède une surface concave cylindrique.

50. Débitmètre selon l'une des revendications 1 à 48, **caractérisé en ce que** le réflecteur (4, 5) possède une surface parabolique.

51. Débitmètre selon l'une des revendications précédentes, **caractérisé en ce que** le rayon du cintrage de la surface et/ou la taille du réflecteur (4, 5) sont accordés sur le champ sonore ou sur la divergence du lobe ultrasonique.
